(19) Europäisches Patentamt / European Patent Office / Office européen des brevets

(11) **EP 4 465 209 A1**

(12) **EUROPEAN PATENT APPLICATION**

(43) Date of publication:
**20.11.2024   Bulletin 2024/47**

(51) International Patent Classification (IPC):
**G06N 3/045** (2023.01)        **G06N 3/092** (2023.01)

(21) Application number: **24171219.9**

(52) Cooperative Patent Classification (CPC):
**G06N 3/092; G06N 3/045;** G06N 3/098

(22) Date of filing: **19.04.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.05.2023   JP 2023077712**

(71) Applicant: **Hitachi, Ltd.**
**Tokyo 100-8280 (JP)**

(72) Inventor: **YAMASHITA, Yasuho**
**Tokyo, 100-8280 (JP)**

(74) Representative: **Strehl Schübel-Hopf & Partner**
**Maximilianstrasse 54**
**80538 München (DE)**

(54)   **REINFORCEMENT LEARNING DEVICE, REINFORCEMENT LEARNING METHOD, AND REINFORCEMENT LEARNING PROGRAM**

(57)   It is possible to perform distributed reinforcement learning in consideration of a risk to be taken by an actor and a learner at the time of action selection. A reinforcement learning device includes: a setting unit configured to set a selection range of a first parameter related to a first risk to be taken when an action to be applied to an analysis target is selected from an action group to a partial range, and set a second parameter related to a second risk to be taken in learning of a value function; an actor configured to select the action based on the value function and the first parameter within the partial range, update a state of the analysis target, and calculate a reward increased as the updated state becomes a new state; a learner configured to update the value function based on the reward and the second parameter; and a determination unit configured to determine, based on a history of the reward calculated when each of a plurality of the first parameters is used, a target output to the actor as a specific first parameter used when the actor selects a specific action of updating the state to the new state.

*FIG. 1*

EP 4 465 209 A1

**Description**

CLAIM OF PRIORITY

The present application claims priority from Japanese patent application No. 2023-77712 filed on May 10, 2023, the content of which is hereby incorporated by reference into this application.

BACKGROUND OF THE INVENTION

1. Field of the Invention

The present invention relates to a reinforcement learning device, a reinforcement learning method, and a reinforcement learning program that execute reinforcement learning.

2. Description of Related Art

In significant reinforcement learning which has been developed in recent years, as one of models in which a particularly significant progress is recognized, distributed reinforcement learning having curiosity is cited (NPL 1). In the distributed reinforcement learning, in a certain learning environment, learning is performed by a large number of actors that perform trials independently of each other, and a learner that collects experiences of the actors and predicts rewards obtained from actions. In the distributed reinforcement learning having curiosity, it is possible to provide a learning model capable of more efficiently perform a search by giving a large reward when an action causing the distributed reinforcement learning to have curiosity, that is, an action connected to an unknown state is selected from the actions of the actor.

In a normal reinforcement learning model including the distributed reinforcement learning in NPL 1, the learning is designed such that an expected value of an obtained reward increases. However, depending on a field to which reinforcement learning is applied, there is a demand for learning, in which it is desired to obtain a reward extremely high at one time than a case where the reward increases on average, or in which it is desired to reduce the possibility of obtaining a low reward as much as possible, that is, high-risk high-return or low-risk low-return is obtained.

PTL 1 discloses risk quantification, policy search, and automated safe policy deployment techniques. A system in PTL 1 includes one or more computing devices configured to execute operations including controlling deployment of a received policy based on at least a part on quantification of a risk that is likely involved in the received policy as opposed to a deployed policy. The controlling includes: using reinforcement learning and a concentration inequality on deployment data that describes the deployment of the deployed policy to predict values of a measure of performance of the received policy and to quantify the risk by calculating one or more statistical guarantees regarding the predicted values; and causing replacement of the deployed policy with the received policy responsive to a determination that the one or more statistical guarantees express at least a confidence level that the measured values of the measure of performance at least correspond to a threshold that is based on at least a part on a measure of performance of the deployed policy.

PTL 2 discloses a method for determining an optimal action considering a risk for each of states in each of phases of a target term by using a computer device. The method includes the steps of: a) selecting one of states which may be taken in a present phase; b) selecting one of executable action candidates; c) calculating a reward obtained by executing the selected one of action candidates and a probability distribution of evaluation values depending on an optimal value in the next phase; d) using the probability distribution of evaluation values to calculate a risk index; e) performing weighting in accordance with a predetermined preference considering the risk index to calculate a value index in the case of executing the action candidate; f) repeating the steps b) to e) for non-selected action candidates; and g) comparing the value indexes for determining one of the action candidates as an optimal action.

Citation List

Patent Literature

PTL 1: US2016/0148251
PTL 2: JP2012-068780A

Non Patent Literature

NPL 1: Badia, Adrià Puigdomènech, et al. "Agent57: Outperforming the atari human benchmark." International Conference on Machine Learning. PMLR, 2020
NPL 2: Mihatsch, O., Neuneier, R. "Risk-Sensitive Reinforcement Learning." Machine Learning 49, 267-290 (2002)

## SUMMARY OF THE INVENTION

PTL 1 and PTL 2 are techniques in which learning is performed in consideration of a risk by estimating the risk when a certain action is selected and weighting a reward according to a value of the risk in each technique. The techniques of PTL 1 and PTL 2 prevent learning when the risk is high, and cannot perform learning aiming at a higher reward by imposing a high risk. In addition, there is no description of a technique of performing learning in consideration of a risk in an algorithm for determining curiosity in distributed reinforcement learning having curiosity.

NPL 2 proposes that, when a learner learns a reward prediction model with each action of an actor, a $\kappa$% learning rate is decreased when the action is an action that obtains a reward higher than a reward predicted by a current prediction model, and the $\kappa$% learning rate is increased when the action is an action that obtains a low reward. When $\kappa$ is positive, learning is performed to avoid the risk by placing importance on a case where a reward is low, and when $\kappa$ is negative, risk finding type learning is performed by placing importance on a case where a reward higher than the expected reward is obtained. Even in this case, there is no description of a technique of performing learning in consideration of a risk in an algorithm for determining curiosity in distributed reinforcement learning having curiosity.

An object of the invention is to enable distributed reinforcement learning in consideration of a risk to be taken by an actor and a learner when an action is selected.

A reinforcement learning device according to an aspect of the invention disclosed in the present application includes: a setting unit configured to set a selection range of a first parameter related to a first risk to be taken when an action to be applied to an analysis target is selected from an action group to a partial range of the selection range, and set a second parameter related to a second risk to be taken in learning of a value function for calculating a value serving as a selection guideline of the action; an actor configured to select the action based on the value function and the first parameter within the partial range, update a state of the analysis target, and calculate a reward increased as the updated state becomes a new state; a learner configured to update the value function based on the reward and the second parameter; and a determination unit configured to determine, based on a history of the reward calculated by the actor when each of a plurality of the first parameters within the partial range is used, the first parameter to be output to the actor as a specific first parameter used when the actor selects a specific action of updating the analysis target to the new state, and output the specific first parameter to the actor.

According to representative embodiments of the invention, it is possible to perform distributed reinforcement learning in consideration of a risk to be taken by an actor and a learner when an action is selected. Problems, configurations, and effects other than those described above will be clarified by descriptions of the following embodiments.

## BRIEF DESCRIPTION OF THE DRAWINGS

FIG. 1 is a diagram showing an execution example of a cyber attack AI according to Embodiment 1.
FIG. 2 is a block diagram showing a hardware configuration example of a reinforcement learning device.
FIG. 3 is a diagram showing an example of an analysis target DB.
FIG. 4 is a diagram showing an example of an action table.
FIG. 5 is a block diagram showing a circuit configuration example of a reinforcement learning circuit according to Embodiment 1.
FIG. 6 is a diagram showing an example of a reward history table.
FIG. 7 is a block diagram showing a configuration example of a learner shown in FIG. 5.
FIG. 8 is a diagram showing an example of a two-dimensional array.
FIG. 9 is a diagram showing an example of a state table related to a state.
FIG. 10 is a diagram showing an operation example of the reinforcement learning circuit.
FIG. 11 is a diagram showing an example of an input and output screen displayed on an output device of the reinforcement learning device according to Embodiment 1.
FIG. 12 is a flowchart showing an example of a data processing procedure according to Embodiment 1.
FIG. 13 is a diagram showing an example of an analysis target DB according to Embodiment 2.
FIG. 14 is a block diagram showing a circuit configuration example of a reinforcement learning circuit according to Embodiment 2.
FIG. 15 is a diagram showing an example of an input and output screen displayed on an output device of the reinforcement learning device according to Embodiment 2.

FIG. 16 is a flowchart showing an example of a data processing procedure according to Embodiment 2.

DESCRIPTION OF EMBODIMENTS

Embodiment 1

Hereinafter, an example of a reinforcement learning device, a data processing method, and a data processing program according to Embodiment 1 will be described with reference to the accompanying drawings. In addition, in Embodiment 1, a data group as an analysis target is, for example, a set of a connection relationship, a vulnerability, and a status of each node in a network including a website and a user thereof, a directory service and a repository service used by the website and the use, and the like, which may be a target of a cyber attack. The network configuration is an example.

Example of Analysis

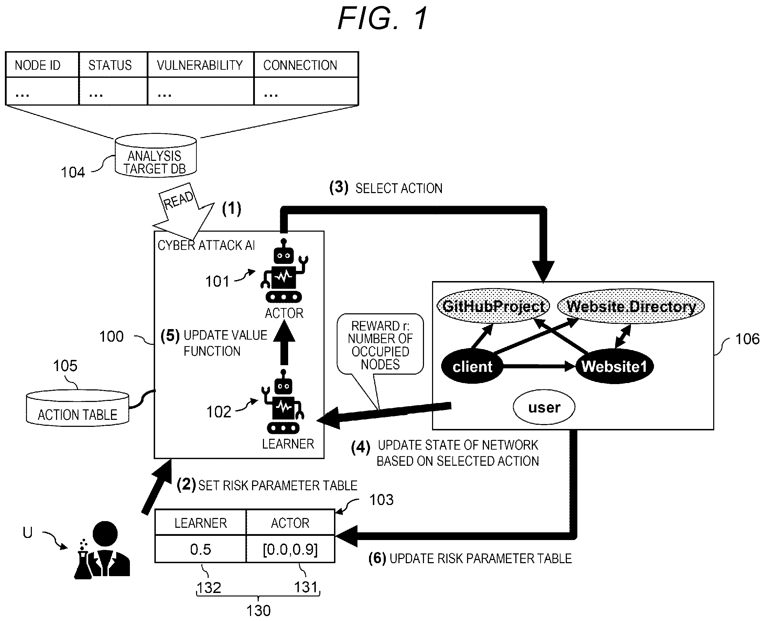

FIG. 1 is a diagram showing an execution example of a cyber attack AI 100 according to Embodiment 1. The cyber attack artificial intelligence (AI) 100 is an attacker that attacks and occupies a node indicated by an ellipse in a network 106, and includes an actor 101 and a learner 102.

The actor 101 is an AI that selects an action to be taken by the cyber attack AI 100 from an action table 105, based on a certain value function and a history of values obtained so far. In FIG. 1, there is one actor 101, and there may be two or more actors 101.

The learner 102 is an AI that updates a value function for determining a value of an action (an attack method for a node) that can be taken by the actor 101, based on an action performed by the actor 101 so far, a state of the network 106 obtained as a result thereof, and a reward r obtained from the state thereof.

A user U is a person who uses the cyber attack AI 100, and may be, for example, a doctor, a scholar, or a researcher, or may be a business operator who provides an analysis service based on the cyber attack AI 100.

(1) The cyber attack AI 100 reads information in an analysis target DB 104. The analysis target DB 104 stores properties (status, vulnerability, connection state) of each node in the network 106 as the analysis target.

(2) The user U selects a risk parameter 130 for determining a risk of each of the actor 101 and the learner 102. The cyber attack AI 100 reads and sets the risk parameter 130 in a risk parameter table 103 by an operation of the user U. The risk is uncertainty of the action selected by the actor 101.

The risk parameter 130 is a combination of an actor risk parameter 131 related to the actor 101 and a learner risk parameter 132 related to the learner 102. The actor risk parameter 131 is a parameter for adjusting a magnitude of the risk to be taken by the actor 101, and is set by a value range [a, b] ($0 \leq a < b \leq 1$) that is a partial range within a selection range [0.0, 1.0].

The actor risk parameter 131 may be set by a plurality of value ranges, for example, [a, b], [c, d] ($0 \leq a < b < c < d \leq 1$). In the example of FIG. 1, the actor risk parameter 131 is [0.0, 0.9], and is a discrete value from 0.0 to 0.9. The learner risk parameter 132 is set by a certain value $\kappa$ ($-1 \leq \kappa \leq 1$).

(3) The actor 101 selects an attack method for a node as an action from the action table 105. The actor 101 selects, for example, an action of maximizing a value function into which Agent 57 type curiosity is introduced. Specifically, for example, the actor 101 (5) calculates an expected value of a value when a discretized value of each curiosity is selected in order to determine a magnitude of the curiosity, and (3) adopts the value of the curiosity having the largest expected value. The actor risk parameter 131 is a parameter for weighting the expected value.

(4) The actor 101 updates the state of the network 106 and calculates the reward r based on the selection action and the vulnerability held by the analysis target DB 104. The reward r is, for example, the number of nodes occupied by the cyber attack AI 100.

The network 106 includes, for example, the status of each node and the connection relationship of the nodes held by the analysis target DB 104. An elliptical figure is a node, and an arrow is an edge indicating a connection relationship between nodes. "Git Hub Project" is an example of the repository service. "Website. Directory" is an example of the directory service. "Website 1" is a website using "Git Hub Project" and "Website. Directory". "client" is a computer that uses "Website 1". "user" is a computer in the network 106. Since "user" is not connected to "Website 1" by the edge, "Website 1" cannot be used.

Black nodes ("Website 1" and "client") are nodes occupied by the cyber attack AI 100 (owned). Shaded nodes ("Git Hub Project" and "Website. Directory") are nodes that are discovered but not occupied by the cyber attack AI 100 (discovered). A white node ("user") is a node that is not discovered by the cyber attack AI 100 (undiscovered).

(5) Based on the updated state of the network 106 and the reward r, the learner 102 updates the value function by, for example, computation using a neural network. The learner risk parameter 132 is a parameter for weighting an updated value of the value function. Thereafter, the cyber attack AI 100 repeatedly executes (3) to (5).

(6) The cyber attack AI 100 may update the risk parameter table according to the operation of the user U based on the state of the network 106 and the reward r obtained by repeatedly executing (3) to (5). After executing (2), the cyber attack AI 100 repeatedly executes (3) to (5).

As described above, the cyber attack AI 100 selects an attack method from the action table 105 based on the risk parameter and updates the state of the network 106.

Hardware Configuration Example of Reinforcement Learning Device 200

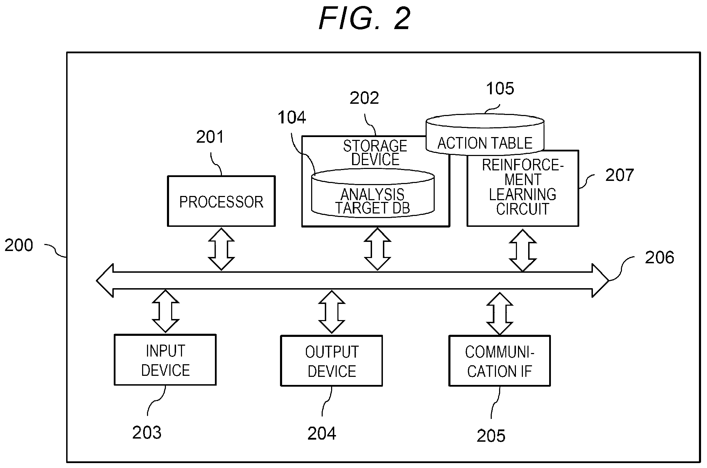

FIG. 2 is a block diagram showing a hardware configuration example of a reinforcement learning device 200. The reinforcement learning device 200 includes a processor 201, a storage device 202, an input device 203, an output device 204, and a communication interface (communication IF) 205. The processor 201, the storage device 202, the input device 203, the output device 204, and the communication IF 205 are connected by a bus 206. The processor 201 controls the reinforcement learning device 200. The storage device 202 is a work area of the processor 201. The storage device 202 is a non-transitory or transitory recording medium that stores various programs or data and the analysis target DB. Examples of the storage device 202 include a read only memory (ROM), a random access memory (RAM), a hard disk drive (HDD), and a flash memory. The input device 203 inputs data. Examples of the input device 203 include a keyboard, a mouse, a touch panel, a numeric keypad, and a scanner. The output device 204 outputs data. Examples of the output device 204 include a display and a printer. The communication IF 205 is connected to a network to transmit and receive data.

The reinforcement learning device 200 implements the cyber attack AI 100 shown in FIG. 1. The cyber attack AI 100 is implemented by causing a processor to execute a program stored in the storage device 202. In the reinforcement learning device 200, the analysis target DB 104 and the action table 105 shown in FIG. 1 are stored in the storage device 202.

The reinforcement learning device 200 may include a reinforcement learning circuit 207. The reinforcement learning circuit 207 has a circuit configuration that executes learning of a value function. The reinforcement learning circuit 207 executes processing of (1) to (6) shown in FIG. 1 with reference to the action table 105. The action table 105 may be stored in, for example, a storage region (not shown) in the reinforcement learning circuit 207. The reinforcement learning circuit 207 is implemented by the circuit configuration, and may be implemented by causing the processor 201 to execute the program stored in the storage device 202.

Analysis Target DB 104

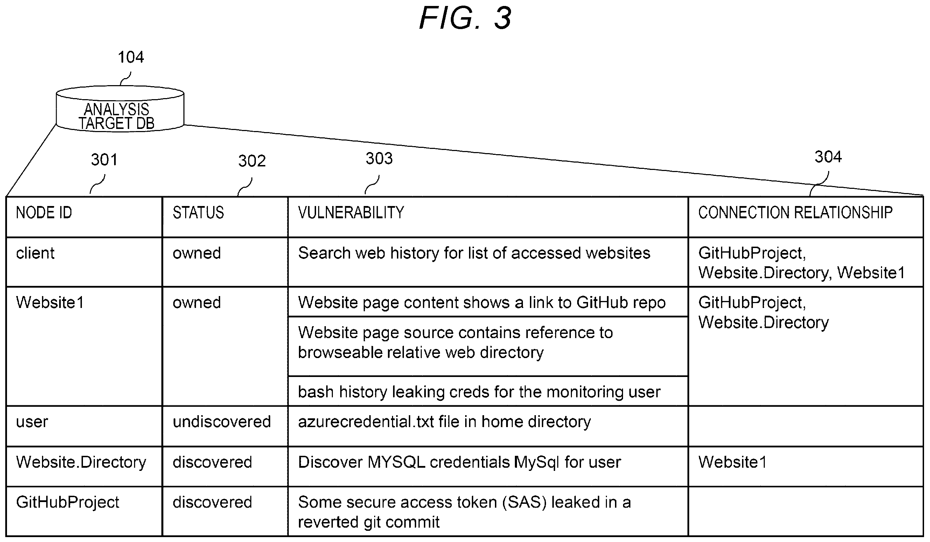

FIG. 3 is a diagram showing an example of the analysis target DB 104. The analysis target DB 104 includes a node ID 301, a status 302, a vulnerability 303, and a connection relationship 304 as fields. A combination of values of the fields in the same row is analysis target data of one node.

The node 301 is a component of the network 106 as the analysis target, and is represented by, for example, "client", "Website", "Website. Directory", "user", and "Git Hub Project".

The status 302 indicates a state of the node 301 that is more likely to be changed by the attack of the cyber attack AI 100. For example, the status 302 is classified into "undiscovered" in which the node 301 is not discovered by the cyber attack AI 100, "discovered" in which the node 301 is discovered, and "owned" in which the node 301 is owned.

The vulnerability 303 indicates a defect that may threaten the safety of the node due to a specific attack. For example, when the node ID 301 is "client" and "Search web history for list of accessed websites" is in the vulnerability 303, it means that connection to "Website 1" is obtained by an action "Scan Web History".

The connection relationship 304 indicates a connection destination node of the node. When the node ID is "client" and "Website" is in the connection relationship 304, it means that connection from "client" (starting end of the arrow) to "Website node" (terminal end of the arrow) is possible.

Action Table 105

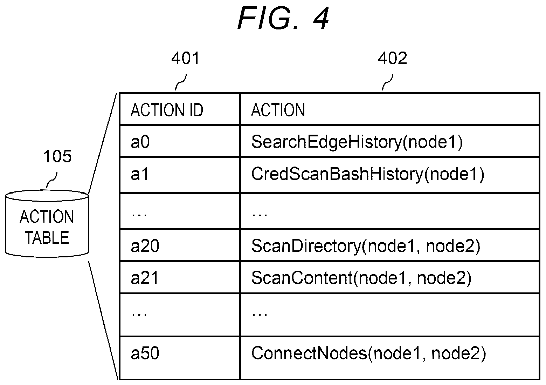

FIG. 4 is a diagram showing an example of the action table 105. The action table 105 is a table in which an attack method for a node of the network 106 as the analysis target is defined as an action. Contents of the action table 105 are set in advance.

The action table 105 includes an action ID 401 and an action 402 as fields. The action ID 401 is identification information for uniquely specifying the action 402.

The action 402 is an attack method selectable by the actor 101. The action 402 is classified into a local attack action, a remote attack action, and a connection action. The local attack action uses, as a variable, one node (node 1) that is a target of a local attack. Specifically, for example, the local attack action is an action of discovering or owning another node from node 1 as a start point. For example, the action 402 whose action ID 401 is "a0" and "a1" corresponds to the local attack action.

The remote attack action uses two nodes (node 1 and node 2), which are start points of a remote attack, as variables. Specifically, for example, the remote attack action is an action of discovering or owning another node from node 1 and node 2 as start points. For example, the action 402 whose action ID 401 is "a20" and "a21" corresponds to the remote attack action.

The connection action uses two nodes (node 1 and node 2), which are a connection start point and a target, as variables. Specifically, for example, in the connection action, the two nodes (node 1 and node 2) are connected by an edge or disconnected. For example, the action 402 whose action ID 401 is "a50" corresponds to the connection action.

A value z of xxx ID yy (xxx is a name, yy is a sign, and z is an alphanumeric string) is represented as xxx ID z. For example, the action 402 whose action ID 401 is "a50" is represented as an action a50.

Configuration Example of Reinforcement Learning Circuit

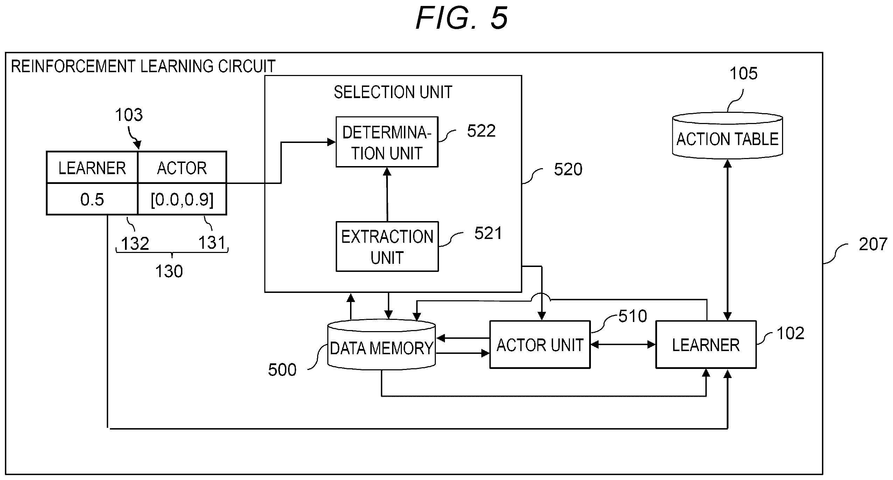

FIG. 5 is a block diagram showing a circuit configuration example of the reinforcement learning circuit 207 according to Embodiment 1. The reinforcement learning circuit 207 includes a data memory 500, an actor unit 510, a selection unit 520, the learner 102, the risk parameter table 103, and the action table 105.

The data memory 500 stores all data of the analysis target DB 104 from the storage device 202, that is, stores the node ID 301, the status 302, the vulnerability 303, and the connection relationship 304.

The data memory 500 stores a history of a discrete value of the actor risk parameter 131 selected by the actor unit 510 so far and a history of the reward r obtained as a result of the action 402 selected by the actor based on the selected discrete value.

The actor unit 510 is one or more actors 101. The number of actors 101 can be set by the operation of the user U.

The actor risk parameter 131 corresponds to a curiosity parameter called an arm in NPL 1. The curiosity is generally an interest about an unknown matter held by a person, but in this example, is an element related to the action 402 and the reward r about an unknown state of the network 106 specified by the actor 101. The unknown state is a new state in which the network 106 does not exist in a state group updated so far from an initial state after the actor 101 starts the action.

Specifically, for example, in a case where the state of the network 106 is unknown to the actor 101, when the actor 101 selects the action 402 connected to the unknown state, the obtained reward r is larger than in the case where the state of the network 106 is known to the actor 101. In the case of the example, the reward r increases as the status 302 changes from "undiscovered" to "discovered" and from "discovered" to "owned". The selection of the action 402 for obtaining such a reward r is curiosity, and information obtained by digitizing the curiosity is a curiosity parameter. In this example, the discrete value of the actor risk parameter 131 is the curiosity parameter.

Hereinafter, for the sake of convenience, the discrete value (curiosity parameter) of the actor risk parameter 131 may be referred to as an "arm", and the identification information for uniquely specifying the discrete value (curiosity parameter) of the actor risk parameter 131 may be referred to as an "arm ID".

The selection unit 520 selects the arm ID and determines the discrete value of the actor risk parameter 131 used by the learner 102. The actor risk parameter 131 corresponds to a weight of an internal value function $z_i(t)$ that gives a reward $r(t)$ to the search-based action 402 with respect to an external value function $z_e(t)$ based on the reward $r(t)$ in a value function $Q(t)$ presented by the learner 102. That is, the value function $Q(t)$ is represented by the following equation (1). t represents a time step.

$$Q(t) = z_e(t) + \beta z_i(t) \quad \ldots \quad (1)$$

$\beta$ in the above equation (1) is the discrete value of the actor risk parameter 131. A plurality of arm IDs selectable in the selection unit 520 are set by the operation of the user U. In this example, the number of arm IDs is 32. The selection unit 520 allocates, as the curiosity parameters, the discrete values of the actor risk parameters 131 corresponding to the set number of arm IDs from the actor risk parameters 131.

For example, the selection unit 520 includes an extraction unit 521 and a determination unit 522. The extraction unit 521 samples a certain number (for example, 100) of the rewards r based on a reward history for each arm ID stored in the data memory 500. This sampling is executed for each actor 101.

Reward History Table

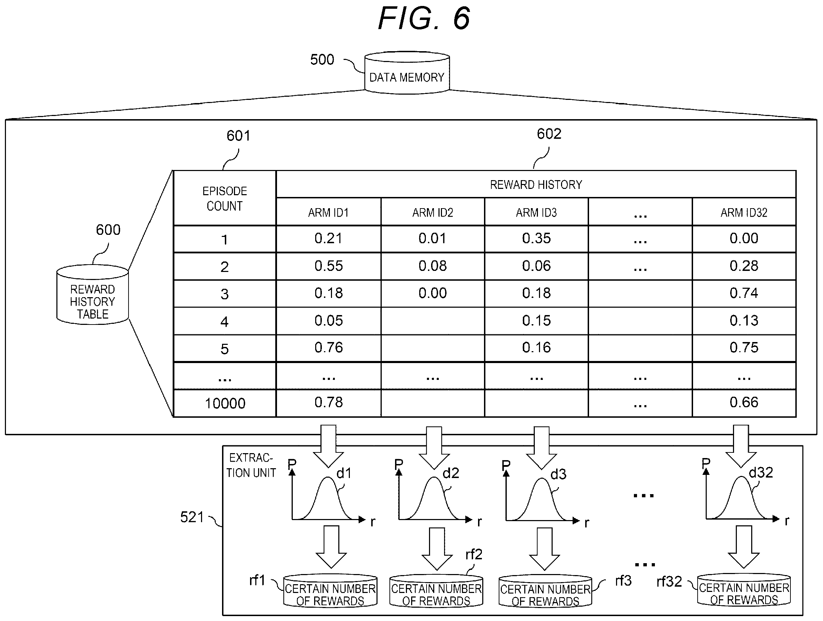

FIG. 6 is a diagram showing an example of a reward history table. A reward history table 600 is stored in the data memory 500. The reward history table 600 exists for each actor 101. The reward history table 600 includes an episode count 601 and a reward history 602 as fields.

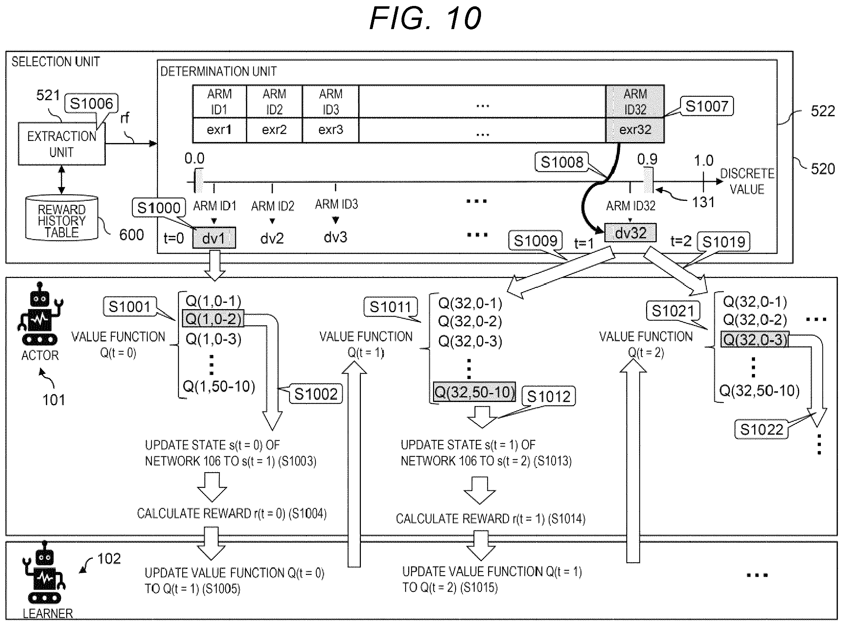

The episode count 601 is the number of times an episode is executed. In the reinforcement learning, the episode is executed one time by learning (see FIG. 10) at a time step $t = m$ times ($m$ is an integer of 1 or more). The example of FIG. 6 indicates that an upper limit of the episode is 10000 times. A smaller value of the episode count 601 indicates a newer episode.

A row in which the value of the episode count 601 is "1" is the latest episode for each arm ID, but even in the same row, between different arm IDs, the episodes are not necessarily the same episode.

The episode may be executed more than 10000 times. In this case, the reward history table 600 stores the latest reward history 602 for up to 10000 times for each arm ID.

The reward history 602 is a history of the reward r for each arm ID. In FIG. 6, since 32 arm IDs exist as an example, discrete values of 32 different actor risk parameters 131 are selected from the actor risk parameters 131.

The values "1" to "32" of the arm IDs are represented as the arm ID 1 to the arm ID 32. When the arm ID 1 to the arm ID 32 are not distinguished from each other, they are simply referred to as arm IDs.

The values in each column of the arm ID 1 to the arm ID 32 are a history of the reward r obtained when the cyber attack AI 100 employs the action 402 selected using the discrete value of the actor risk parameter 131 specified by the arm ID. Specifically, the reward $r(t)$ is output at the last time step $t$ in the episode.

For example, since 10000 rewards r are stored in the column of the arm ID 1, the discrete value of the actor risk parameter 131 specified by the arm ID 1 is used to select the action 402 10000 times, and the reward r is calculated 10000 times by the selection of the action 402. For example, when the episode count 601 is "1", the reward $r = 0.21$ is the reward r in the latest episode.

Since three rewards r are stored in the column of the arm ID 2, the discrete value of the actor risk parameter 131 specified by the arm ID 2 is used to select the action 402 three times, and the reward r is calculated three times by the selection of the action 402. For example, when the episode count 601 is "1", the reward $r = 0.01$ is the reward r in the latest episode.

However, the reward $r = 0.21$ when the episode count 601 in the arm ID 1 is "1" and the reward $r = 0.01$ when the episode count 601 in the arm ID 2 is "1" are not necessarily the rewards r in the same episode.

The extraction unit 521 generates probability distributions d1 to d132 of the reward r for each arm ID in the reward history 602, and samples a certain number (for example, up to 100) of rewards r for each arm ID from the reward history table 600 based on the generated probability distributions d1 to d132.

A horizontal axis of the probability distributions d1 to d132 (when the probability distributions d1 to d132 are not distinguished from each other, they are simply referred to as probability distributions d) indicates the reward r of the reward history 602 indicated by the column of the arm ID. A vertical axis indicates an appearance probability P of the reward r specified by the reward history 602.

For example, the extraction unit 521 estimates an average and a variance of the rewards r in the reward history 602 assuming that the reward history 602 of each arm follows a normal distribution. The extraction unit 521 generates the probability distribution d based on the estimated average and variance of the rewards r. The extraction unit 521 randomly samples a certain number of rewards rf1 to rf132 (when the rewards rf1 to rf132 are not distinguished from each other, they are simply referred to as rewards rf) according to the probability distribution d.

Referring back to FIG. 5, the determination unit 522 selects an arm ID, in which the expected value of the reward r is the maximum, based on the certain number of rewards rf1 to rf132 sampled by the extraction unit 521, and outputs the arm ID to the actor unit 510. The selection of the arm ID is executed for each actor 101.

Specifically, for example, the determination unit 522 extracts, for each of the certain number of rewards rf1 to rf132 (that is, for each arm ID), a reward group from a reward located at a higher a percent to a reward located at a higher b percent according to a percentile defined by the value range [a, b] of the actor risk parameter 131 in the risk parameter table 103. The determination unit 522 calculates the expected value of the reward r for each arm ID using the reward group extracted for each arm ID. The expected value of the reward r may be an average value or a median value of the extracted reward group.

a is a lower limit value of the actor risk parameter 131, and $0 \leq a < 1$. b is an upper limit value of the actor risk parameter 131, and $0 < b \leq 1$.

The determination unit 522 specifies, from a set of the arm IDs, an arm ID having a specific expected value (for example, a maximum value) from among the expected values of the rewards r calculated for the arm IDs. For example, the value range of the actor risk parameter 131 is set to [0.0, 0.9].

In this case, the determination unit 522 calculates, for each arm ID, an expected value of the reward r based on an average value of a reward group from a reward at a higher 0 percent to a reward of a magnitude located at a higher 90 percent for the certain number of sampled rewards rf. The determination unit 522 determines an arm specified by the arm ID, in which the expected value of the reward r is the maximum, as the discrete value of the actor risk parameter 131 used by the actor unit 510.

As described above, by determining an arm (curiosity), for example, in a case where the value range of the actor risk parameter 131 is [0.0, 0.9], the determination unit 522 can determine the action 402 while ignoring a higher 10 percentile of the reward r expected from the reward history 602 so far. That is, by ignoring the reward r of the higher 10 percentile that can be obtained by chance, an action selection with a lower risk can be easily executed by the actor unit 510.

Conversely, in a case where the value range of the actor risk parameter 131 is [0.1, 1.0], by ignoring a lower 10 percentile of the reward r that can be expected from the reward history 602 so far, the actor unit 510 can easily execute the action 402, in which the higher the risk is, the higher the reward r may be obtained.

Instead of using, as the actor risk parameter 131, a percentile that determines a reward sample to be taken into consideration when an expected value is calculated from the sampled reward, it is also possible to use, as the actor risk parameter 131, a percentile that determines a reward sample to be taken into consideration when an expected value is calculated from the reward history 602. In addition, a percentile, which determines a reward sample to be taken into consideration when an expected value is calculated from any reward column other than the above, may be used as the actor risk parameter 131.

The actor unit 510 and the learner 102 form a part of the cyber attack AI 100 shown in FIG. 1. The actor unit 510 calculates a value of a value function Q (a value of the action 402) using a curiosity parameter (the discrete value of the actor risk parameters 131) of the arm ID selected by the selection unit 520 and a current state of the network 106, and selects the action 402 that maximizes the value of the value function Q.

A plurality of actors 101 may exist in the actor unit 510. In this case, the same number of the selection units 520 may be disposed for the plurality of actors 101, or a single selection unit 520 may be disposed for the plurality of actors 101. When there are the plurality of actors 101, a state s(t) of the network 106 is updated for each actor 101. Accordingly, more actions 402 can be collected in the same processing time. In addition, it is possible to give a personality to the actor 101 by making a threshold eth of a random number value e generated by a random unit 703 described later different for each actor 101.

The learner 102 is a value function model in the reinforcement learning having curiosity, which learns two value functions, that is, the external value function $z_e(t)$ and the internal value function $z_i(t)$. In the state s(t) of the network 106 at the current time step t, the learner 102 obtains an action a(t) selected by the actor unit 510, a state s(t + 1) of the network 106 updated by the action a(t), and a reward r(t + 1) obtained from the state s(t + 1).

Then, the learner 102 controls the actor unit 510 and the selection unit 520. Specifically, for example, when the state s(t) of the network 106 is received from the actor unit 510, the learner 102 updates the value function Q that determines the action 402 to be selected by the actor unit 510.

Learner 102

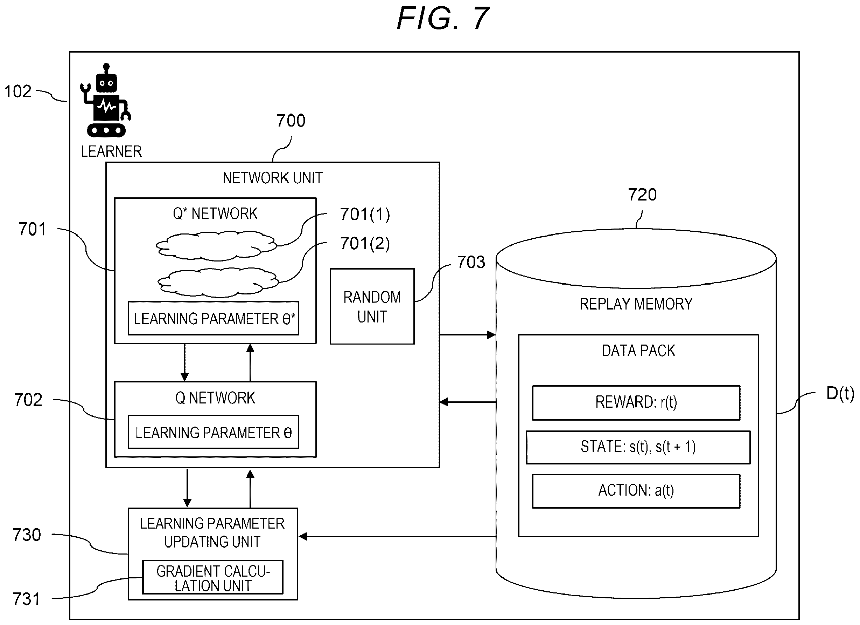

FIG. 7 is a block diagram showing a configuration example of the learner 102 shown in FIG. 5. The learner 102 includes a network unit 700, a replay memory 720, and a learning parameter updating unit 730. The network unit 700 includes a Q* network 701, a Q network 702, and a random unit 703.

The Q* network 701 and the Q network 702 are action value functions having the same configuration for learning the action a(t) that maximizes the value. The value in this case is an index value indicating a magnitude of the reward r(t + 1) obtained from the state s(t + 1) of the network 106 updated by taking the action 402 defined by the action a (t).

Specifically, for example, the Q* network 701 is deep reinforcement learning DQN (Deep Q-Network) that inputs the state s(t) of the network 106 and outputs a two-dimensional array indicating a value of a value function z(t) including a value of the external value function $z_e(t)$ and a value of the internal value function $z_i(t)$ of each action 402 based on a learning parameter $\theta^*$.

Two-Dimensional Array

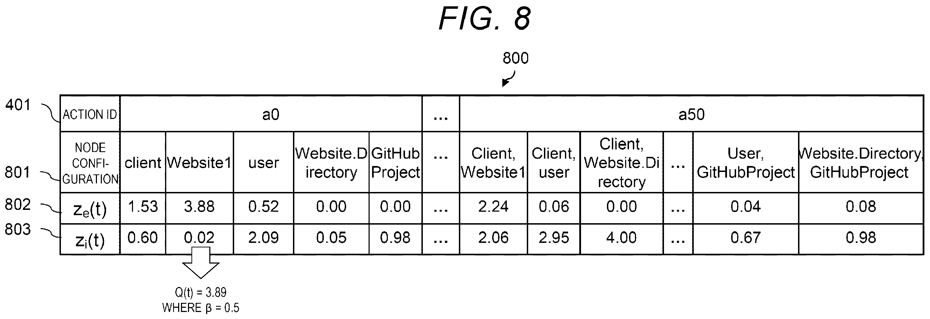

FIG. 8 is a diagram showing an example of a two-dimensional array. A two-dimensional array 800 includes a one-dimensional array 802 indicating the value of the external value function $z_e(t)$ and a one-dimensional array 803 indicating the value of the internal value function $z_i(t)$, which are calculated for each node configuration 801 combinable in the action 402 specified by the action ID 401. The node configuration 801 is defined by the number of types of nodes in the network 106, which is a variable of the action 402, and a combination thereof.

For example, since an action a0 is one variable, the node configuration 801 includes five types of nodes, that is, five ways. On the other hand, since the action a0 is two variables, the node configuration 801 includes ten ways (SC2).

Returning to FIG. 7, the Q network 702 is deep reinforcement learning DQN having the same configuration as the Q* network 701. The Q network 702 sets the learning parameter to $\theta$, and obtains the value of each action 402 in the current state s(t) of the network 106 for each node configuration 801 by the above equation (1).

The random unit 703 outputs the random number value e of 0 or more and 1 or less. The random number value e is compared with the threshold eth. For example, when the random number value e is equal to or larger than the threshold eth, the actor 101 randomly selects the action 402, and when the random number value e is less than the threshold eth, the actor 101 selects the action 402 based on the Q* network 701. The threshold eth can be set to any value by the user U. When a random action selection is excluded, the threshold eth > 1 may be set.

The learning parameter updating unit 730 includes a gradient calculation unit 631. By using the gradient calculation unit 631, the learning parameter updating unit 730 calculates a gradient g in consideration of both the reward r(t) calculated from the state s(t + 1) of the network 106 obtained by the certain action a(t) and the learner risk parameter 132 of the risk parameter table 103. The learning parameter updating unit 730 updates the learning parameter θ by adding the gradient g to the learning parameter θ.

The replay memory 720 stores a data pack D(t). The data pack D(t) includes the state s(t), the state s(t + 1), the action a(t), and the reward r(t) of the network 106 at the time step t.

Referring back to FIG. 7, a configuration example of the Q* network 701 will be specifically described. The state s(t) is input to the Q* network 701. Here, the state s(t) is specifically exemplified.

State Table

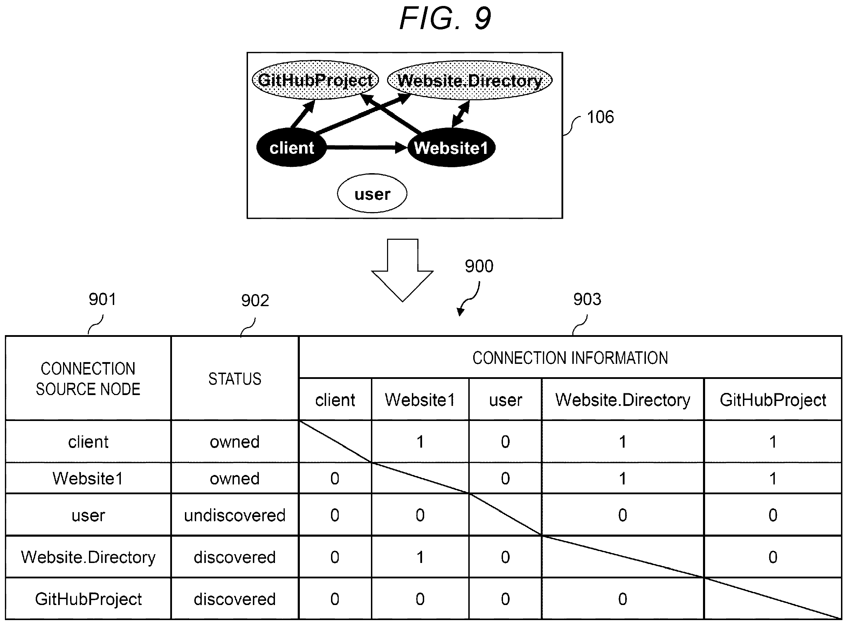

FIG. 9 is a diagram showing an example of a state table related to the state s(t) . A state table 900 includes a connection source node 901, a status 902, and connection information 903.

The connection source node 901 is the node 301 connected to a connection destination node, that is, the node 301 connected to a starting end of the edge indicated by the arrow in the network 106. The status 902 is the status 302 of the connection source node 901.

The status 902 changes when the action 402 taken by the actor 101 is executed. For example, when the node 301 that is not discovered in the cyber attack AI 100 is discovered by the action 402, the status 902 is updated from "undiscovered" to "discovered" . When the node 301 discovered by the cyber attack AI 100 is owned by the action 402, the status 902 is updated from "discovered" to "owned".

The connection information 903 indicates presence or absence of connection to the connection destination node. Specifically, for example, the connection information 903 represents the node 301 connected to the terminal end of the edge indicated by the arrow in the network 106 as the connection destination node, and represents the presence or absence of connection to the connection source node 901 with a flag of "1" or "0". "1" indicates connection, and "0" indicates disconnection.

Referring back to FIG. 7, the Q* network 701 is implemented by two networks of a network 701(1) that outputs the one-dimensional array 802 related to the external value function $z_e(t)$ and a network 701(2) that outputs the one-dimensional array 803 related to the internal value function $z_i(t)$ .

For example, a first layer and a second layer of the network 701(1) are a fully coupled network (the number of neurons: 256, an activation function: ReLU). An output layer of the network 701(1) is a fully coupled network, and outputs, as an output signal, the one-dimensional array 802 having the actions a0 to a50 of the action table 105 as indexes.

A first layer of the network 701(2) is a layer for calculating 51 types of states obtained when each of the actions a0 to a50 of the action table 105 is performed in the state s(t) of the network 106. A second layer and a third layer of the network 701(2) are a fully coupled network (the number of neurons: 256, an activation function: ReLU) that receives each of the 51 types of states s(t) and outputs 51 types of vectors.

An output layer of the network 701(2) calculates, for each of the 51 types of vectors, a minimum value of a euclidean distance to a vector group obtained by inputting a past state s group stored in the replay memory 720 to the fully coupled network of the second layer and the third layer, and outputs the one-dimensional array 803 in which the actions a0 to a50 are used as indexes of minimum values for the 51 types of vectors.

Operation Example of Reinforcement Learning Circuit 207

FIG. 10 is a diagram showing an operation example of the reinforcement learning circuit 207. For ease of understanding, FIG. 10 shows the operation example from a time step t = 0 to t = 2 in a certain episode.

Step S1000: t = 0

The determination unit 522 in the selection unit 520 selects any discrete value dv from 32 discrete values dv1 to dv32 (when the discrete values dv1 to dv32 are not distinguished from each other, they are simply referred to as discrete values dv) extracted from the value range [0.0, 0.9] of the actor risk parameter 131. In FIG. 10, the discrete value dv1 is selected. The discrete values dv1 to dv32 correspond to the arm ID 1 to the arm ID 32, respectively.

Step S1001: t = 0

In step S1001, the random number value e is less than the threshold eth. The actor 101 calculates the two-dimensional array 800 in the arm ID 1 corresponding to the discrete value dv1. For each node configuration 801, the actor 101 substitutes a value of $z_e(t = 0)$ of the one-dimensional array 802 in the node configuration 801 into $z_e(t)$ of the above equation (1), and substitutes a value of $z_i(t = 0)$ of the one-dimensional array 802 into $z_i(t)$ of the above equation (1). For example, in the case of the node configuration 801 "client" of the action a0, the actor 101 substitutes "1.53" into $z_e(t)$ and substitutes "0.60" into $z_i(t)$.

When the discrete value dv1 = 0.1, the value function Q(t = 0) in this case is 1.53 + 0.1 × 0.60 = 1.59. The actor 101 executes such calculation for all of the node configurations 801 of the actions a0 to a50 in the arm ID 1.

Q(x, y-z) in FIG. 10 indicates a value of a value function. x indicates a node ID. y is a numeral number (y = 0 in the case of a0) in the action ID 401. z is a number uniquely indicating the node configuration 801 in the action ID 401. For example, Q(1, 0-2) indicates a value in "Website 1" which is the second node configuration 801 in the action a0 in the node ID 1.

S1002: t=0

The actor 101 selects the action 402 having a maximum value from the calculated values Q(1, 0-1) to Q(1, 50-10) of the value function. In this example, the action a0 corresponding to Q(1, 0-2) is selected.

Step S1003: t = 0

The actor 101 updates the state s(t = 0) of the network 106 to the state s(t = 1) by executing the selected action a0 (attack method).

Step S1004: t = 0

The actor 101 calculates the reward r(t = 0) based on the state s(t = 1).

Step S1005: t = 0

The learner 102 updates the value function Q(t = 0) to the value function Q(t = 1).

Step S1006: t = 0

As shown in FIG. 6, the extraction unit 521 of the selection unit 520 randomly samples a certain number of rewards rf1 to rf132 from the reward history table 600 according to the probability distribution d.

Step S1007: t = 0

The determination unit 522 of the selection unit 520 calculates the expected value of the reward r for each of the certain number of rewards rf1 to rf132 sampled by the extraction unit 521. The determination unit 522 specifies an arm ID serving as a sampling source of a certain number of rewards rf serving as a calculation source of a maximum expected value among the expected values of the rewards r calculated for the certain number of rewards rf1 to rf132.

Step S1008: t = 0

The determination unit 522 of the selection unit 520 specifies the discrete value dv in the actor risk parameter 131 corresponding to the arm ID specified in step S1007. Here, the specified discrete value dv does not change until the episode ends. In this example, the discrete value dv32 is specified.

Step S1009: t = 0

The determination unit 522 of the selection unit 520 outputs the discrete value dv32 specified in step S1008 to the actor 101.

Step S1011: t = 1

In step S1011, the random number value e is less than the threshold eth. Similarly to step S1001, the actor 101 calculates the two-dimensional array 800 in the arm ID 32 corresponding to the discrete value dv32.

Step S1012: t = 1

The actor 101 selects the action 402 having a maximum value from the calculated values Q(32, 0-1) to Q(32, 50-10) of the value function. In this example, the action a50 corresponding to Q(32, 50-10) is selected.

Step S1013: t = 1

The cyber attack AI 100 updates the state s(t = 1) of the network 106 to the state s(t = 2) by executing the selected action a50 (attack method).

Step S1014: t = 1

The cyber attack AI 100 calculates the reward r(t = 1) based on the state s(t = 2).

Step S1015: t = 1

The learner 102 updates the value function Q(t = 1) to the value function Q(t = 2).

Step S1019: t = 1

The determination unit 522 of the selection unit 520 outputs the discrete value dv32 specified in step S1008 to the actor 101.

Step S1021: t = 2

In step S1021, the random number value e is less than the threshold eth. Similarly to step S1011, the actor 101 calculates the two-dimensional array 800 in the arm ID 32 corresponding to the discrete value dv32.

Step S1022: t = 2

The actor 101 selects the action 402 having a maximum value from the calculated values Q(32, 0-1) to Q(32, 50-10) of the value function. In this example, the action a0 corresponding to Q(32, 0-3) is selected. Thereafter, the same processing is executed until the episode ends.

Example of Input And Output Screen

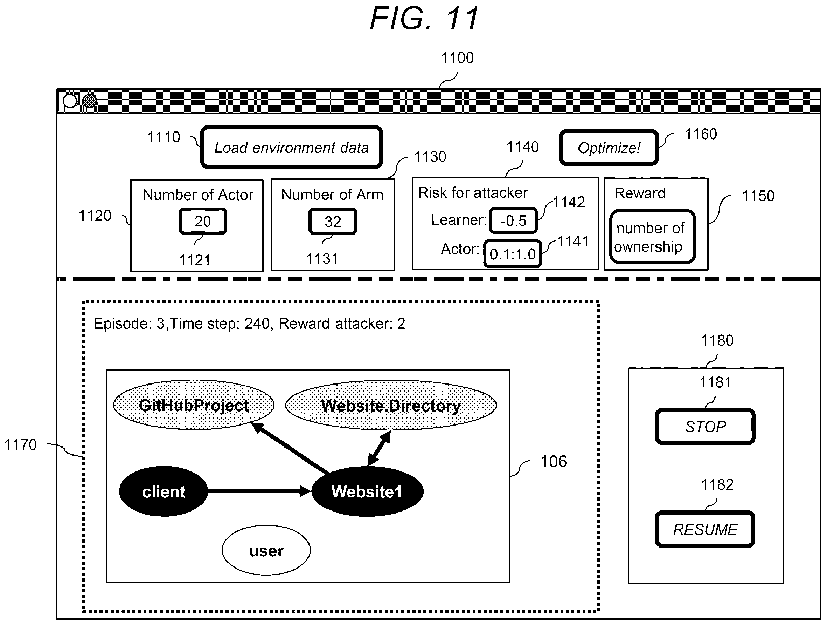

FIG. 11 is a diagram showing an example of an input and output screen displayed on the output device 204 of the reinforcement learning device 200 according to Embodiment 1. An input and output screen 1100 includes a load button 1110, an actor number input region 1120, an arm number input region 1130, a risk parameter input region 1140, a reward selection region 1150, a start button 1160, a network display region 1170, and a stop and restart button 1180.
The load button 1110 is a user interface for loading, by the pressing of the user U, an entry of the analysis target DB 104 into the data memory 500.
The actor number input region 1120 is a region for receiving an input of the number of actors 101 to be disposed. The arm number input region 1130 is a region for receiving an input of the number of arms in the selection unit 520, that is, the number of discrete values of the actor risk parameter.
The risk parameter input region 1140 includes an input region 1141 of the actor risk parameter 131 and an input region 1142 of the learner risk parameter 132. The reward selection region 1150 is a region for receiving selection of the type of reward r(t) to be given to the obtained state s(t) of the network 106. Specifically, for example, the number of occupied (status information is "owned") nodes is selectable. Accordingly, as described above, the reward r is calculated as the number of occupied nodes. As the type of the selectable reward r, another type such as a ratio of the number of occupied nodes may be selectable.
The start button 1160 is a user interface for starting, by the pressing of the user U, the operation of the cyber attack AI 100 by using the number of actors, the number of arms, the risk parameter, and the reward set in the actor number input region 1120, the arm number input region 1130, the risk parameter input region 1140, and the reward selection region 1150 in the network 106 loaded by the load button 1110.

The network 106 updated by the action 402 of the actor 101 is displayed in the network display region 1170. The network 106 displayed in the network display region 1170 may be the state table 900 or a graph network diagram.

The stop and restart button 1180 includes a stop button 1181 and a restart button 1182. The stop button 1181 is a user interface for temporarily stopping, by the pressing of the user U, the operation of the cyber attack AI 100. The restart button 1182 is a user interface for restarting, by the pressing of the user U, the operation of the cyber attack AI 100 temporarily stopped by the stop button 1181.

The input and output screen 1100 is displayed on, for example, a display that is an example of the output device 204 of the reinforcement learning device 200. The input and output screen 1100 may be displayed, by transmitting information related to the input and output screen 1100 from the communication IF 205 of the reinforcement learning device 200 to another computer communicably connected to the communication IF 205, on a display of the other computer.

Example of Data Processing Procedure

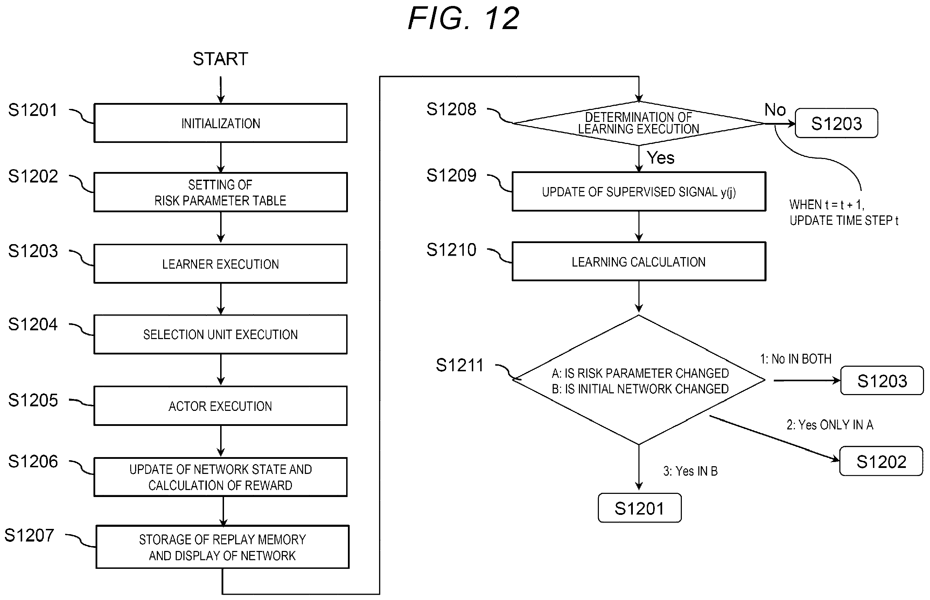

FIG. 12 is a flowchart showing an example of a data processing procedure according to Embodiment 1. Before the start of the processing, the entry of the analysis target DB 104 is loaded into the data memory 500 by pressing the load button 1110 on the input and output screen 1100 of FIG. 11.

Step S1201

The reinforcement learning device 200 executes initialization. Specifically, for example, the reinforcement learning device 200 sets a calculation step m to m = 1. The reinforcement learning device 200 initializes the learning parameter θ* of the Q* network 701 with a random weight. The reinforcement learning device 200 initializes the learning parameter θ of the Q network 702 with a random weight. All cells of the reward history 602 are set to blank, the time step t is set to t = 0, and the state s(t) is set to the initial state s(t = 0) of the network 106 held by the analysis target DB 104.

Step S1202

The reinforcement learning device 200 sets the risk parameter table 103 that stores a value of the risk parameter 130 input by the user U.

Step S1203

The learner 102 determines the two-dimensional array 800 by inputting the state s(t = 0) to the Q* network 701. In addition, the learner 102 generates the random number value e by the random unit 603.

Step S1204

As shown in steps S1006 to S1009 (S1019) of FIG. 10, the selection unit 520 specifies the arm ID, in which the expected value of the reward r is the maximum, based on the actor risk parameter 131 and the reward history 602 stored in the data memory 500, and outputs the discrete value dv of the actor risk parameter 131 corresponding to the specified arm ID. At the time step t = 0, the selection unit 520 selects a random discrete value dv from the value range of the actor risk parameter 131 by the determination unit 522, and outputs the selected discrete value dv to the actor 101.

Step S1205

The actor 101 obtains the random number value e generated by the random unit 703 of the learner 102. Then, the actor 101 determines a selection policy (random selection or selection based on the two-dimensional array 800) of the action 402 based on the random number value e, and selects the action 402 according to the determined selection policy.

Specifically, for example, when the random number value e is equal to or larger than the threshold eth (for example, eth = 0.5), the actor 101 randomly selects one action from the action table 105, and randomly selects a necessary number of target nodes for a node which is a target of the selected action 402.

For example, when the action 402 randomly selected from the action table 105 is "Cred Scan Bash History (node 1)" of the action a1, one node is randomly selected as node 1 from the network 106. For example, when "Website. Directory" is selected as node 1, the actor 101 adopts "Cred Scan Bash History (Website. Directory)" as the action 402 in which node 1 is designated.

On the other hand, when the random number value output by the random unit 703 is less than eth, the actor 101 inputs the state s(t) to the Q* network 701 in the network unit 700, and calculates the two-dimensional array 800.

For each node configuration 801 of the two-dimensional array 800, the actor 101 substitutes a value of the one-dimensional array 802 indicating the value of the external value function $z_e(t)$ and a value of the one-dimensional array 803 indicating the value of the internal value function $z_i(t)$ in the above equation (1), and substitutes, into $\beta$, the discrete value dv (dv1 in the example of FIG. 10) of the actor risk parameter 131 corresponding to the arm selected by the selection unit 520.

For example, in the case of the discrete value dv1 = 0.5, a maximum value of the value function Q(t = 0) is a value "3.89" which is a sum of the value "3.88" of the external value function $z_e(t = 0)$ of the target node "Website 1" of the action ID a0 and the value "0.01" obtained by multiplying the value "0.02" of the internal value function $z_i(t = 0)$ of the target node "Website 1" of the action ID a0 by the discrete value dv1 = 0.5.

In the action table 105, the action 402 of the action ID a0 is "Search Edge History (node 1)". The actor 101 selects "Search Edge History (Website 1)" which is the maximum value. As described above, the actor 101 can select an action with higher value.

Step S1206

As shown in steps S1003 and S1004 of FIG. 10, the actor 101 updates the state of the network 106 to the state s(t + 1) after performing the action 402 selected in step S1205 at the time step t, and calculates the reward r(t) . Specifically, for example, the actor 101 updates the status 902 and the connection information 903 in the state table 900 based on the action 402 selected in step S1205.

Specifically, for example, in the state table 900 in the updated state s(t + 1), the actor 101 calculates the number of nodes in which the status 902 is "owned" as the reward r(t). The actor 101 stores the reward r(t) in the data memory 500 and outputs the reward r(t) to the learner 102.

The reward r(t) is not limited to the number of nodes in which the status 902 is "owned". For example, points may be given according to the status 902, and a total of the points may be set as the reward r(t). For example, as in a case where "undiscovered" is 0 point, "discovered" is 1 point, and "owned" is 3 point, the reward r(t) when an unknown state s(t + 1) is obtained can be increased by setting the points to be higher as the state transitions to a new state in which an effect of an attack is exhibited. As described above, the type of the reward r can also be selected in the reward selection region 1150.

Step S1207

Next, the network unit 700 stores, in the replay memory 720, the data pack D(t) in which the reward r(t), the reward history 602, and the states s(t) and s(t + 1) of the network 106 are one set of data.

The reinforcement learning device 200 displays the updated state s(t + 1) of the network 106. Specifically, for example, the reinforcement learning device 200 loads the data pack D(t) stored in the storage device 202, draws the graph network diagram using the status 902 and the connection information 903 in the state s(t + 1) of the network 106 in the data pack D(t), and displays the graph network diagram in the network display region 1170.

The reinforcement learning device 200 displays, in the network display region 1170, the reward r(t) in the data pack D(t). When the data pack D(t) is not stored in the storage device 202, the reinforcement learning device 200 may display an analysis result indicating an analysis failure.

Step S1208

When t is non-zero and a remainder of t/T is zero in a case where the time step t is a predetermined period T (T is an integer of 1 or more) (step S1208: Yes), the reinforcement learning device 200 proceeds to step S1209. Otherwise (step S1208: No), the time step t is set to t = t + 1, and the processing returns to step S1203. Accordingly, it is possible to execute learning according to step S1209 and step S1210 at the time step t of the predetermined period T.

Step S1209

The learning parameter updating unit 730 randomly loads J data packs D(j) (j = 1, ..., J) (hereinafter, referred to as a data pack group Ds) from the replay memory 720, and updates a supervised signal y(j) by the following equation (2). The supervised signal y(j) is a predicted value of the value of the action 402. In Embodiment 1, an upper limit of J is 100. [Math 1]

$$y(j) = r(j) + \gamma max \, Q(s(j + 1); \theta) \; ...(2)$$

In the above equation (2), r(j) on the right side is a reward in the j-th data pack D(j). $\gamma$ on the right side is a discount rate, and in Embodiment 1, $\gamma$ is a fixed value of 0.998. maxQ(s(j + 1); $\theta$) on the right side is calculation processing of calculating a maximum value of a value function Q(s (j + 1); $\theta$).

The value function Q(s(j + 1); $\theta$) indicates a value of an action in a state s(j + 1) on a condition that the learning parameter $\theta$ is applied. Specifically, for example, the network unit 700 inputs the state s(j + 1) to the Q network 702, and the Q network 702 applies the learning parameter $\theta$ to calculate the two-dimensional array 800 of t = j. The network unit 700 calculates, for each node configuration 801, the value of the action 402 which is a sum of a value of an external value function $z_e$(s(j + 1); $\theta$) and a value obtained by weighting a value of an internal value function $z_i$(s(j + 1); $\theta$) by the value $\beta$ (discrete value dv) of the curiosity as in the following equation (3).

[Math 2]

$$Q(s(j + 1); \theta) = z_e(s(j + 1); \theta) + \beta z_i(s(j + 1); \theta) \; ...(3)$$

The external value function $z_e$(s(j + 1); $\theta$) on the right side of the above equation (3) indicates a value of an external value function $z_e$(j + 1) in the state s(j + 1) on the condition that the learning parameter $\theta$ is applied. The internal value function $z_i$(s(j + 1); $\theta$) on the right side of the above equation (3) indicates a value of an internal value function $z_i$(j + 1) in the state s (j + 1) on the condition that the learning parameter $\theta$ is applied.

For example, when a value "3.89" of Q(s(j + 1); $\theta$) obtained from a value "3.88" of an external value function $z_e$(j) and a value "0.02" of an internal value function $z_i$(j) in the column of the node configuration 801 "Website 1" of the action a0 in FIG. 8 is larger than the value of Q(s(j + 1); $\theta$) of any other node configuration 801, the calculation processing maxQ(s(j + 1); $\theta$) outputs the value "3.89" indicated by the action value in the node configuration 801 "Website 1" of the action a0. As described above, the learning parameter updating unit 730 updates the supervised signal y(j).

Step S1210

Next, the learning parameter updating unit 730 executes learning calculation. Specifically, for example, the gradient calculation unit 631 outputs the gradient g for the learning parameter $\theta$ using the following equation (4), and updates the learning parameter $\theta$ by adding the gradient g to the learning parameter $\theta$.

[Math 3]

$$\begin{cases} \theta = \theta + (1 - \kappa)\left(y(j) - Q(s(j); \theta)\right)^2 & if \; y(j) - Q(s(j); \theta) > 0 \; ...(4A) \\ \theta = \theta + (1 + \kappa)\left(y(j) - Q(s(j); \theta)\right)^2 & otherwise \; ...(4B) \end{cases} \quad (4)$$

k in the above equation (4) is the learner risk parameter 132. In a case where $\kappa$ is $0 < \kappa \leq 1$, when the supervised signal y(j) is larger than a value Q(s (j); $\theta$) predicted by the Q* network 701, learning is performed with a smaller learning rate (1 - $\kappa$) or (1 + $\kappa$), and in the opposite case, a larger learning rate is used. That is, the learning is of a low-risk low-return type that places importance on avoiding the risk, in which learning is not performed when a value higher than prediction is obtained, and learning is strongly performed when the value is lower than the prediction.

On the other hand, when $\kappa$ is $-1 \leq \kappa < 0$, the learning is of a high-risk high-return type that places importance on aiming at a higher value with a risk, in which learning is not performed when the value is lower than the prediction, and learning is strongly performed when the value is higher than the prediction.

The second term on the right side of the above equation (4) is the gradient g of the value of the action 402. Accordingly, the Q network 702 can indicate a reward, for example, the action 402 in which the number of nodes, in which the "owned" status 902 is "owned", increases, based on the updated learning parameter $\theta$ in consideration of a reward r(j).

In the learning calculation (step S1210), the learning parameter updating unit 730 overwrites the learning parameter $\theta$* of the Q* network 701 with the updated learning parameter $\theta$ of the Q network 702. That is, the learning parameter $\theta$* has the same value as that of the updated learning parameter $\theta$. Accordingly, the Q* network 701 can specify the action value, that is, the action 402 which can be expected to increase prediction accuracy of an objective variable.

Step S1211

The reinforcement learning device 200 determines whether at least one of the risk parameter table 103 and the analysis target DB 104 is changed (step S1211). When neither the risk parameter table 103 nor the analysis target DB 104 is changed (step S1211: 1), the time step t is updated to t = t + 1, and the processing proceeds to step S1203.

When only the risk parameter table 103 among the risk parameter table 103 and the analysis target DB 104 is changed (step S1211: 2), the time step t is updated to t = t + 1, and the processing proceeds to step S1202. For example, this corresponds to a case where the stop button 1181 is pressed on the input and output screen 1100, a value is re-input in the risk parameter input region 1140, and the restart button 1182 is pressed.

When only the analysis target DB 104 among the risk parameter table 103 and the analysis target DB 104 is changed (step S1211: 3), the processing proceeds to step S1201. For example, this corresponds to a case where the stop button 1181 is pressed on the input and output screen 1100, the load button 1110 is pressed again, and the restart button 1182 is pressed.

When the time step t reaches an upper limit, the episode ends, and the processing is restarted from step S1201 for the next episode. When the number of times of the episode reaches an upper limit, data processing ends.

As described above, according to Embodiment 1, it is possible to automatically obtain a cyber attack that maximizes a certain reward r for a certain defined network 106 after defining a risk to be taken.

Embodiment 2

Next, Embodiment 2 will be described. In Embodiment 1, the cyber attack AI 100 responsible for a cyber attack is described. In contrast, in Embodiment 2, an example, in which a defense AI independent of the cyber attack AI 100 is provided in addition to the cyber attack AI 100, will be described. Similarly to the cyber attack AI 100, the defense AI includes an actor and a learner. The defense AI is an AI that defends a node such that the status 902 of the node of the network 106 does not become "owned", or returns a node whose status 902 becomes "owned" (changes from "owned" to "discovered"). In Embodiment 2, since differences from Embodiment 1 will be mainly described, the same components as those in Embodiment 1 are denoted by the same signs, and description thereof will be omitted.

Analysis Target DB

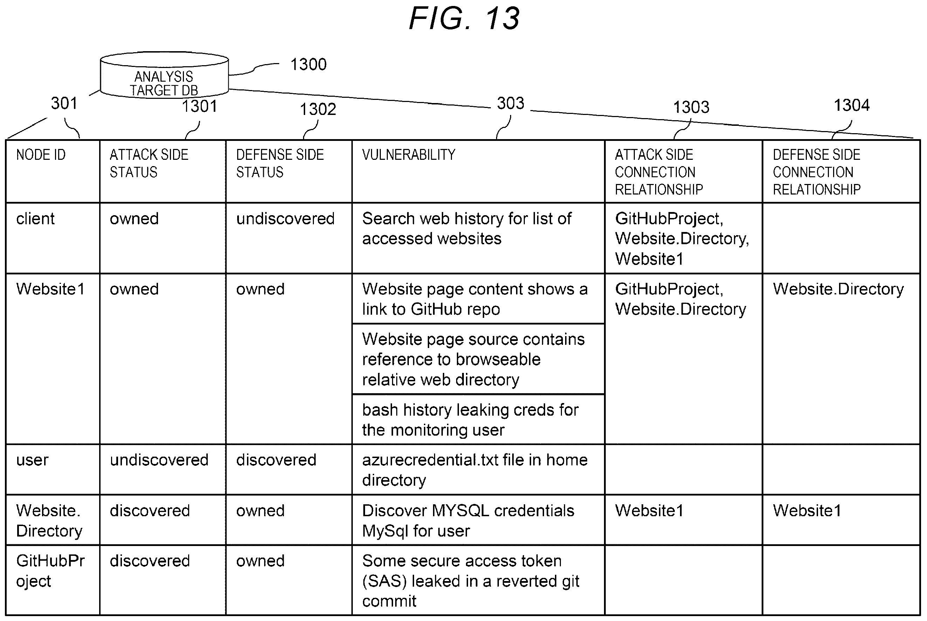

FIG. 13 is a diagram showing an example of an analysis target DB according to Embodiment 2. An analysis target DB 1300 includes the node ID 301, an attack side status 1301, a defense side status 1302, the vulnerability 303, an attack side connection relationship 1303, and a defense side connection relationship 1304. A combination of values of the fields in the same row is analysis target data of one node.

The attack side status 1301 is the status 302 of the node as viewed from the cyber attack AI 100. Specifically, for example, the attack side status 1301 indicates a state of the node 301 that is more likely to be changed by the attack of the cyber attack AI 100.

The defense side status 1302 is the status 302 of the node as viewed from the defense AI. Specifically, for example, the defense side status 1302 indicates the state of the node 301 that is more likely to be changed by the defense of the defense AI.

The attack side connection relationship 1303 indicates a connection destination node of the node as viewed from the cyber attack AI 100. The defense side connection relationship 1304 indicates a connection destination node of the node as viewed from the defense AI.

Reinforcement Learning Circuit

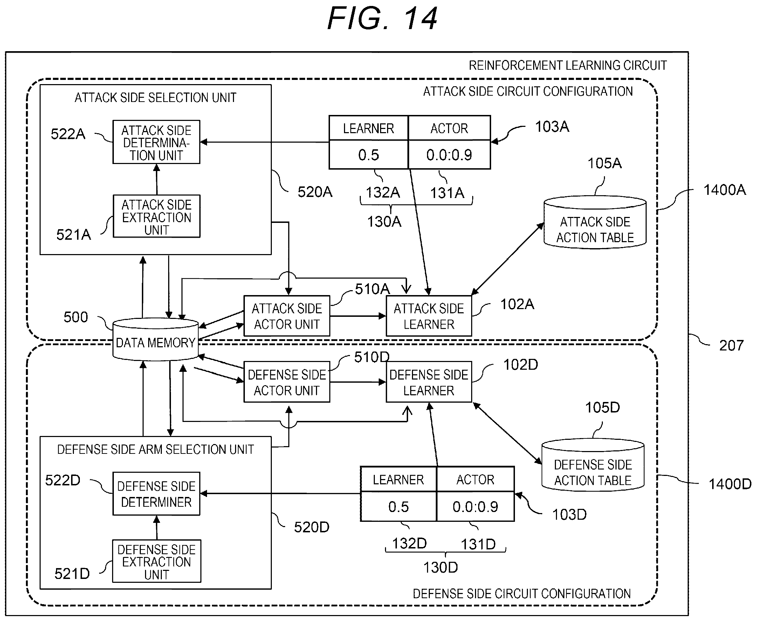

FIG. 14 is a block diagram showing a circuit configuration example of the reinforcement learning circuit 207 according to Embodiment 2. In Embodiment 2, the reinforcement learning circuit 207 includes an attack side circuit configuration 1400A and a defense side circuit configuration 1400D. The attack side circuit configuration 1400A is a circuit configuration showing one cyber attack AI 100. When a plurality of the cyber attack AIs 100 are disposed, a plurality of the attack side circuit configurations 1400A are provided.

The defense side circuit configuration 1400D is a circuit configuration showing one defense AI. When a plurality of the defense AIs are disposed, a plurality of the defense side circuit configurations 1400D are provided. Each of the attack side circuit configuration 1400A and the defense side circuit configuration 1400D has the configuration shown in FIG. 5.

Therefore, a configuration, in which "A" is added to the end of the sign shown in FIG. 5, is the configuration of the attack side circuit configuration 1400A, and an "attack side" is added to the head of the name of the configuration. For example, a sign 520A to which "A" is added to the end of the selection unit 520 is referred to as an attack side selection unit 520A.

Similarly, a configuration, in which "D" is added to the end of the sign shown in FIG. 5, is a configuration on the defense side circuit configuration 1400D side, and a "defense side" is added to the head of the name of the configuration. For example, a sign 520D to which "D" is added to the end of the selection unit 520 is referred to as a defense side selection unit 520D.

When the attack side and the defense side are not distinguished from each other, "A" and "D" at the ends of the signs and the "attack side" and the "defense side" at the heads are omitted. The data memory 500 is shared by the attack side circuit configuration 1400A and the defense side circuit configuration 1400D.

A difference between the attack side circuit configuration 1400A and the defense side circuit configuration 1400D is in the action table 105. Specifically, for example, as shown in FIG. 4, an attack side action table 105A defines the action 402 necessary for the attack side circuit configuration 1400A, which is the cyber attack AI 100, to attack a node in the network 106.

On the other hand, a defense side action table 105D defines the action 402 necessary for the defense side circuit configuration 1400D, which is the defense AI, to defense a node in the network 106. Specifically, for example, the action 402 in the defense side action table 105D is a defense method selectable by a defense side actor unit 510D. The action 402 is classified into a local defense action, a remote defense action, and a connection action.

The local defense action uses, as a variable, one node (node 1) that is a target of a local defense. Specifically, for example, the local defense action is an action of concealing another node from node 1 as a start point ("discovered" → "undiscovered"), or depriving an owned node ("owned" → "discovered").

The remote defense action uses two nodes (node 1 and node 2), which are start points of a remote defense, as variables. Specifically, for example, the remote attack action is an action of concealing another node from node 1 and node 2 as start points ("discovered" → "undiscovered"), or depriving an owned node ("owned" → "discovered") .

That is, the defense side action table 105D includes an action 402 against the action 402 of the attack side action table 105A.

The attack side circuit configuration 1400A and the defense side circuit configuration 1400D share, in the data memory 500, only the actions 402 performed by the attack side circuit configuration 1400A and the defense side circuit configuration 1400D and the state s(t) of the network 106 obtained as a result thereof. Specifically, for example, the attack side circuit configuration 1400A and the defense side circuit configuration 1400D share the state table 900 shown in FIG. 9. Here, the state s(t) of the network 106 updated by the attack side circuit configuration 1400A is referred to as a state s(t)A, and the state s(t) of the network 106 updated by the defense side circuit configuration 1400D is referred to as a state s (t) D.

For example, when the attack side circuit configuration 1400A updates the state s(t)A to a state s(t + 1)A at a certain time step t, the state s(t + 1)A updated by the attack side circuit configuration 1400A is referred to as the state s(t)D, and the defense side circuit configuration 1400D updates the state s(t + 1)A to a state s(t + 1)D. Then, the attack side circuit configuration 1400A updates the state s(t + 1)A to the state s(t + 1)D.

Here, an update example of the state s(t), in which the attack side circuit configuration 1400A attacks first and the defense side circuit configuration 1400D defends later at the same time step t, is described, but the update of the state s(t), in which the defense side circuit configuration 1400D defends first and the attack side circuit configuration 1400A attacks later, may be performed.

When the action 402 in which the attack side circuit configuration 1400A and the defense side circuit configuration 1400D compete with each other is selected without defining which of the attack side circuit configuration 1400A and the defense side circuit configuration 1400D performs an attack or defense first, it may be assumed that neither of the actions 402 is adopted and the state s(t) does not change.

On the other hand, the action table 105, the obtained reward r, the reward history table 600, and the network unit 700 in the learner 102 do not share the data pack D(t) stored in the replay memory 720.

The reward r(t) in the attack side circuit configuration 1400A is as described in Embodiment 1. On the other hand, the reward r(t) in the defense side circuit configuration 1400D is, for example, a value obtained by subtracting the number of nodes, in which the status 902 is "owned", from the total number of nodes in the network 106.

The number of nodes, in which the status 902 is "owned", is not limited. For example, points may be given according to the status 902, and a total of the points may be set as the reward r(t). For example, as in a case where "undiscovered" is 3 point, "discovered" is 1 point, and "owned" is 0 point, the points are set to be lower as the state transitions to a new state in which an effect of an attack is exhibited.

As described above, the reward r(t) in the defense side circuit configuration 1400D decreases as the state becomes the unknown state s(t + 1).

The attack side circuit configuration 1400A and the defense side circuit configuration 1400D may execute the same processing as in FIG. 12 simultaneously and in parallel while sharing the time step t. While one of the attack side circuit configuration 1400A and the defense side circuit configuration 1400D advances one time step (steps S1203 to S1207), the other unit may repeat steps S1203 to S1207 a plurality of times.

Example of Input And Output Screen

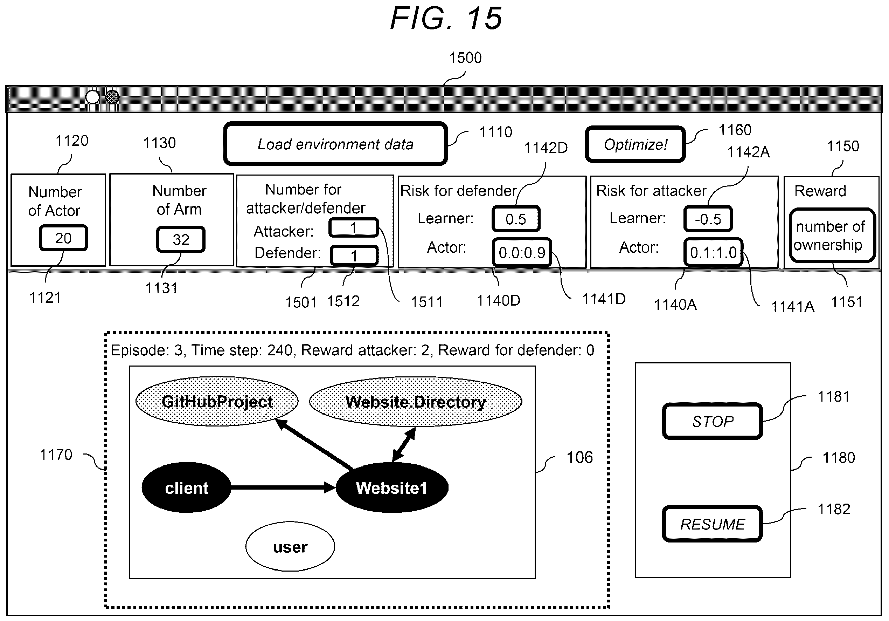

FIG. 15 is a diagram showing an example of an input and output screen displayed on the output device 204 of the reinforcement learning device 200 according to Embodiment 2. An input and output screen 1500 is divided into configurations applied to the attack side circuit configuration 1400A and the defense side circuit configuration 1400D in the configuration of the input and output screen 1100.

Therefore, a configuration, in which "A" is added to the end of the sign shown in FIG. 11, is a configuration used for execution in the attack side circuit configuration 1400A, and an "attack side" is added to the head of the name of the configuration. For example, a sign 1141A, in which "A" is added to the end of the input region 1141, is referred to as an attack side input region 1141A.

Similarly, a configuration, in which "D" is added to the end of the sign shown in FIG. 11, is a configuration used for execution in the defense side circuit configuration 1400D, and a "defense side" is added to the head of the name of the configuration. For example, a sign 1141D, in which "D" is added to the end of the input region 1141, is referred to as a defense side input region 1141D.

When the attack side and the defense side are not distinguished from each other, "A" and "D" at the ends of the signs and the "attack side" and the "defense side" at the heads are omitted.

The input and output screen 1500 includes an input region 1501 for the number of attackers and the number of defenders. The input region 1501 for the number of attackers and the number of defenders includes an attacker count input region 1511 and a defender count input region 1512. The attacker count input region 1511 is a region for receiving an input of the number of attackers by an operation of the user U. The number of attackers is the number of the cyber attack AIs 100. The defender count input region 1512 is a region for receiving an input of the number of defenders by an operation of the user U. The number of defenders is the number of defense AIs.

The reward r obtained for each of the attacker (cyber attack AI 100) and the defender (defense AI) is displayed in the network display region 1170.

In the example of FIG. 15, in an attack side risk parameter input region 1140A, "0.1: 1.0" is input to the input region 1141A of the attack side actor risk parameter 131. Accordingly, by ignoring the lower 10 percentile of the sampled reward r, the cyber attack AI 100 causes an attack side actor unit 510A to execute the action 402 in which the higher the risk is, the higher the reward r may be obtained.

"-0.5" is input to an input region 1142A of the attack side learner risk parameter 132. Accordingly, the cyber attack AI 100 causes an attack side learner 102A to execute high-risk high-return learning that places importance on aiming at a higher value with a risk, in which learning is not performed when a value is lower than prediction, and learning is strongly performed when the value is higher than the prediction.

In the example of FIG. 15, in a defense side risk parameter input region 1140D, "0.0: 0.9" is input to the input region 1141D of the defense side actor risk parameter 131. Accordingly, by ignoring the reward r of the higher 10 percentile that can be obtained by chance, the defense AI can cause the defense side actor unit 510D to execute action selection with a lower risk.

"0.5" is input to an input region 1142D of the defense side learner risk parameter 132. Accordingly, the defense AI causes a defense side learner 102D to execute low-risk low-return type learning that places importance on avoiding the risk, in which learning is not performed when the value higher than the prediction is obtained, and learning is strongly performed when the value is lower than the prediction.

Next, an example, in which the attack side circuit configuration 1400A and the defense side circuit configuration 1400D share the time step t and execute the same processing as in FIG. 12 simultaneously and in parallel, will be described.

Example of Data Processing Procedure

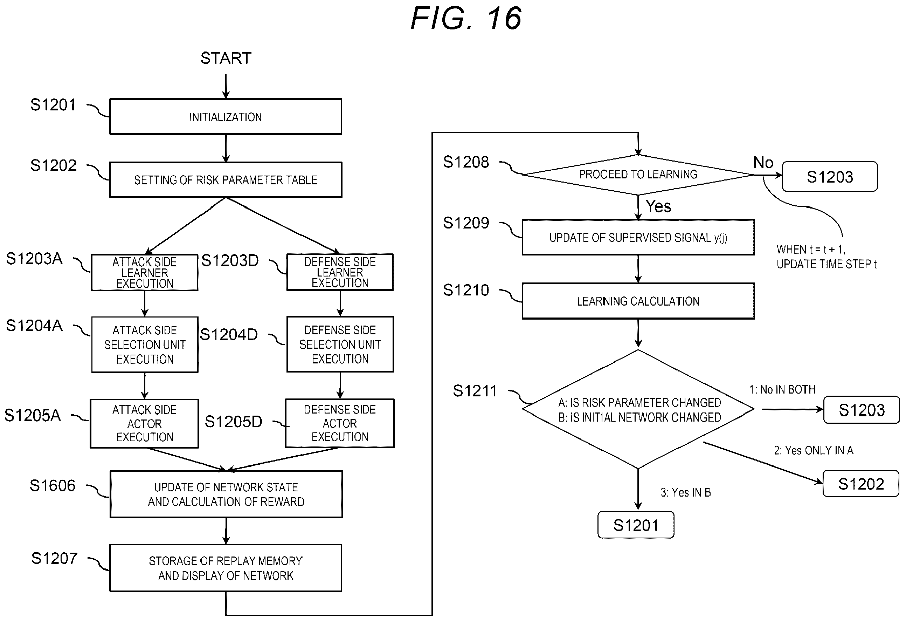

FIG. 16 is a flowchart showing an example of a data processing procedure according to Embodiment 2. Before the start of the processing, the entry of the analysis target DB 104 is loaded into the data memory 500 by pressing the load button 1110 on the input and output screen 1100 of FIG. 16.

A step, in which "A" is added to the end of the sign shown in FIG. 16, is processing executed by the attack side circuit configuration 1400A, and an "attack side" is added to the head of the name of the step. For example, step S1203A, in which "A" is added to the end of the learner execution (step S1203), is referred to as attack side learner execution.

Similarly, a step, in which "D" is added to the end of the sign shown in FIG. 16, is processing executed by the defense side circuit configuration 1400D, and a "defense side" is added to the head of the name of the step. For example, step S1203D, in which "D" is added to the end of the learner execution (step S1203), is referred to as defense side learner execution.

In the case of Embodiment 2, since the attack side circuit configuration 1400A and the defense side circuit configuration 1400D share the state s(t), in step S1606 of FIG. 16, as described above, at the same time step t, one of the attack side circuit configuration 1400A and the defense side circuit configuration 1400D (for example, the attack side circuit configuration 1400A) first updates the state s(t)A to the state s(t + 1)A. When the updated state s(t + 1)A is set to the state s(t)D, the defense side circuit configuration 1400D updates the updated state s(t + 1)A to the state s(t + 1)D, and the attack side circuit configuration 1400A sets the updated state s(t + 1)D to the updated state s(t + 1)A. Accordingly, the state is shared between the attack side circuit configuration 1400A and the defense side circuit configuration 1400D.

The reward r(t) is calculated by the number of "owned" in the state table 900 in the updated state s(t + 1).

As described above, according to Embodiment 2, it is possible to automatically obtain a cyber attack that maximizes the reward r on the attack side and a defense that maximizes the reward r on the defense side for a certain defined network 106 after defining a risk to be taken.

In Embodiment 2, the configuration in which one attack side circuit configuration 1400A and one defense side circuit configuration 1400D are disposed is described, but one or more attack side circuit configurations 1400A and one or more defense side circuit configurations 1400D may be disposed. Only the plurality of attack side circuit configurations 1400A may be used.

In Embodiment 1 and Embodiment 2, the network 106 is described as an example of an attack target or a defense target. However, the attack target or the defense target is not limited to such a cyber attack or a defense thereof. For example, the invention is also applicable to stock transactions in a certain market. The analysis target DBs 104 and 1300 may be set as a data set having, as a variable group, company information such as an ID of each company, a stock price of the company, a pure profit, the number of employees, and sales. The action table 105 may be set as a trade of a stock, an action target of the action table 105 may be set as a company, and the state s(t) may be set as company information of the analysis target DBs 104 and 1300. In Embodiment 1, the reward r(t) may be a total profit obtained by the user. In the case of Embodiment 2, the defenders and the attackers may be a plurality of competition stock traders.

As described above, the reinforcement learning device 200 according to the embodiment adjusts, in the distributed reinforcement learning having curiosity, the learner risk parameter 132, which is a risk to be adopted by the learner 102 in the learning of the value function serving as the selection guideline of the action 402, and the actor risk parameter 131 which is a risk to be adopted when the actor 101 selects the arm to be adopted when the action 402 is selected, that is, the discretized value of the curiosity parameter. Accordingly, high-risk high-return type learning or low-risk low-return type learning is possible in consideration of both of the risks.

The invention is not limited to the above-described embodiments, and includes various modifications and equivalent configurations within the scope of the appended claims. For example, the above-described embodiments are described in detail for easy understanding of the invention, and the invention is not necessarily limited to those including all the configurations described above. A part of a configuration according to one embodiment can be replaced with a configuration according to another embodiment. A configuration according to one embodiment can also be added to a configuration according to another embodiment. Another configuration may be added to a part of a configuration according to each embodiment, and a part of the configuration according to each embodiment may be deleted or replaced with another configuration.

A part or all of the above-described configurations, functions, processing units, processing methods, and the like may be implemented by hardware by, for example, designing with an integrated circuit, or may be implemented by software by, for example, a processor interpreting and executing a program for implementing each function.

Information on such as a program, a table, and a file for implementing each function can be stored in a storage device such as a memory, a hard disk, or a solid state drive (SSD), or in a recording medium such as an integrated circuit (IC) card, an SD card, or a digital versatile disc (DVD) .

Control lines and information lines considered to be necessary for description are shown, and all control lines and information lines for implementation are not necessarily shown. Actually, it may be considered that almost all the configurations are connected to each other.

**Claims**

1. A reinforcement learning device comprising:

   a setting unit configured to set a selection range of a first parameter related to a first risk to be taken when an action to be applied to an analysis target is selected from an action group to a partial range of the selection range, and set a second parameter related to a second risk to be taken in learning of a value function for calculating a value serving as a selection guideline of the action;
   an actor configured to select the action based on the value function and the first parameter within the partial range, update a state of the analysis target, and calculate a reward increased as the updated state becomes a new state;

a learner configured to update the value function based on the reward and the second parameter; and
a determination unit configured to determine, based on a history of the reward calculated by the actor when each of a plurality of the first parameters within the partial range is used, the first parameter to be output to the actor as a specific first parameter used when the actor selects a specific action of updating the analysis target to the new state, and output the specific first parameter to the actor.

2. The reinforcement learning device according to claim 1, wherein
the determination unit is configured to calculate an expected value of the reward for the history of the reward of each of the plurality of first parameters within the partial range, and determine, based on the expected value of the reward of the first parameter, the specific first parameter used for next action selection.

3. The reinforcement learning device according to claim 2, wherein
the determination unit is configured to determine, as the specific first parameter, the first parameter within the partial range in which the expected value of the reward is maximum.

4. The reinforcement learning device according to claim 1, wherein
a lower limit value of the partial range is a lower limit value of the selection range, and an upper limit value of the partial range is smaller than an upper limit value of the selection range.

5. The reinforcement learning device according to claim 1, wherein
a lower limit value of the partial range is larger than a lower limit value of the selection range, and an upper limit value of the partial range is an upper limit value of the selection range.

6. The reinforcement learning device according to claim 1, wherein
the learner is configured to update a learning parameter of the value function based on the second parameter and a gradient of the value function.

7. The reinforcement learning device according to claim 1, further comprising:

a plurality of execution entities each including the setting unit, the actor, the learner, and the determination unit, wherein
the actors of the plurality of execution entities share the updated state.

8. The reinforcement learning device according to claim 1, further comprising:

a first execution entity including the setting unit, the actor, the learner, and the determination unit; and
a second execution entity including the setting unit, the actor, the learner, and the determination unit, and in which the action group includes an action against the action group in the first execution entity, wherein
the actors of the first execution entity and the second execution entity are configured to share the updated state, and
the actor of the second execution entity is configured to select the action based on the value function, update the state of the analysis target, and calculate the reward such that the reward decreases as the updated state becomes the new state.

9. A reinforcement learning method executed by a reinforcement learning device including an actor that executes action selection in reinforcement learning, a learner that determines a value of a selection action in the reinforcement learning, a setting unit, and a determination unit, the reinforcement learning method comprising:

executing, by the setting unit, setting processing of setting a selection range of a first parameter related to a first risk to be taken when an action to be applied to an analysis target is selected from an action group to a partial range of the selection range, and setting a second parameter related to a second risk to be taken in learning of a value function for calculating a value serving as a selection guideline of the action;
executing, by the actor, calculation processing of selecting the action based on the value function and the first parameter within the partial range, updating a state of the analysis target, and calculating a reward increased as the updated state becomes a new state;
executing, by the learner, updating processing of updating the value function based on the reward and the second parameter; and
executing, by the determination unit, determination processing of determining, based on a history of the reward calculated by the actor when each of a plurality of the first parameters within the partial range is used, the first parameter to be output to the actor as a specific first parameter used when the actor selects a specific action of updating the analysis target to the new state, and outputting the specific first parameter to the actor.

10. A reinforcement learning program that causes a processor for controlling an actor and a learner in reinforcement learning to execute:

setting processing of setting a selection range of a first parameter related to a first risk to be taken when an action to be applied to an analysis target is selected from an action group to a partial range of the selection range, and setting a second parameter related to a second risk to be taken in learning of a value function for calculating a value serving as a selection guideline of the action;

calculation processing of the actor selecting the action based on the value function and the first parameter within the partial range, updating a state of the analysis target, and calculating a reward increased as the updated state becomes a new state;

updating processing of the learner updating the value function based on the reward and the second parameter; and

determination processing of determining, based on a history of the reward calculated by the actor when each of a plurality of the first parameters within the partial range is used, the first parameter to be output to the actor as a specific first parameter used when the actor selects a specific action of updating the analysis target to the new state, and outputting the specific first parameter to the actor.

# FIG. 1

| NODE ID | STATUS | VULNERABILITY | CONNECTION |
|---------|--------|---------------|------------|
| ... | ... | ... | ... |

ANALYSIS TARGET DB
104

**(1)** READ

CYBER ATTACK AI

ACTOR
101

**(3)** SELECT ACTION

LEARNER
102

**(5)** UPDATE VALUE FUNCTION

100

ACTION TABLE
105

REWARD r:
NUMBER OF
OCCUPIED
NODES

Website Directory

GitHubProject    Website1

client    user

106

**(4)** UPDATE STATE OF NETWORK
BASED ON SELECTED ACTION

**(2)** SET RISK PARAMETER TABLE

SET RISK PARAMETER TABLE
103

**(6)** UPDATE RISK PARAMETER TABLE

| LEARNER | ACTOR |
|---------|-------|
| 0.5 | [0.0,0.9] |

132    131
130

U

## FIG. 2

## FIG. 3

ANALYSIS TARGET DB — 104

| NODE ID | STATUS | VULNERABILITY | CONNECTION RELATIONSHIP |
|---|---|---|---|
| | 301 | 302 | 303 | 304 |
| client | owned | Search web history for list of accessed websites | GitHubProject, Website.Directory, Website1 |
| Website1 | owned | Website page content shows a link to GitHub repo | GitHubProject, Website.Directory |
| | | Website page source contains reference to browseable relative web directory | |
| | | bash history leaking creds for the monitoring user | |
| user | undiscovered | azurecredential.txt file in home directory | |
| Website.Directory | discovered | Discover MYSQL credentials MySql for user | Website1 |
| GitHubProject | discovered | Some secure access token (SAS) leaked in a reverted git commit | |

EP 4 465 209 A1

EP 4 465 209 A1

## FIG. 4

| ACTION ID | ACTION |
|-----------|--------|
| a0 | SearchEdgeHistory(node1) |
| a1 | CredScanBashHistory(node1) |
| … | … |
| a20 | ScanDirectory(node1, node2) |
| a21 | ScanContent(node1, node2) |
| … | … |
| a50 | ConnectNodes(node1, node2) |

401    402

105

ACTION
TABLE

## FIG. 5

REINFORCEMENT LEARNING CIRCUIT

103

| LEARNER | ACTOR |
|---------|-------|
| 0.5 | [0.0,0.9] |

132    131

130

SELECTION UNIT

DETERMINA-TION UNIT    522

520

EXTRACTION UNIT    521

105

ACTION TABLE

207

500    DATA MEMORY

ACTOR UNIT    510

LEARNER    102

EP 4 465 209 A1

*FIG. 6*

500 DATA MEMORY

| EPISODE COUNT | REWARD HISTORY | | | | |
|---|---|---|---|---|---|
| | ARM ID1 | ARM ID2 | ARM ID3 | ... | ARM ID32 |
| 1 | 0.21 | 0.01 | 0.35 | ... | 0.00 |
| 2 | 0.55 | 0.08 | 0.06 | ... | 0.28 |
| 3 | 0.18 | 0.00 | 0.18 | | 0.74 |
| 4 | 0.05 | | 0.15 | | 0.13 |
| 5 | 0.76 | | 0.16 | | 0.75 |
| ... | ... | ... | ... | ... | ... |
| 10000 | 0.78 | | | ... | 0.66 |

601 602 600

REWARD HISTORY TABLE

EXTRACTION UNIT 521

P d1 r
P d2 r
P d3 r
...
P d32 r

rf1 CERTAIN NUMBER OF REWARDS
rf2 CERTAIN NUMBER OF REWARDS
rf3 CERTAIN NUMBER OF REWARDS
rf32 CERTAIN NUMBER OF REWARDS

## FIG. 7

102 LEARNER

700 NETWORK UNIT

701 Q* NETWORK
701(1)
701(2)
LEARNING PARAMETER θ*

703 RANDOM UNIT

702 Q NETWORK
LEARNING PARAMETER θ

730 LEARNING PARAMETER UPDATING UNIT
731 GRADIENT CALCU-LATION UNIT

720 REPLAY MEMORY

DATA PACK
REWARD: r(t)
STATE: s(t), s(t + 1)
ACTION: a(t)

D(t)

EP 4 465 209 A1

# FIG. 8

800

| ACTION ID | a0 | | | | | ... | a50 | | | | | |
|---|---|---|---|---|---|---|---|---|---|---|---|---|
| NODE CONFI-GURATION | client | Website1 | user | Website.Directory | GitHub Project | ... | Client, Website1 | Client, user | Client, Website.Directory | ... | User, GitHubProject | Website.Directory, GitHubProject |
| $z_e(t)$ | 1.53 | 3.88 | 0.52 | 0.00 | 0.00 | ... | 2.24 | 0.06 | 0.00 | ... | 0.04 | 0.08 |
| $z_i(t)$ | 0.60 | 0.02 | 2.09 | 0.05 | 0.98 | ... | 2.06 | 2.95 | 4.00 | ... | 0.67 | 0.98 |

401
801
802
803

$Q(t) = 3.89$
WHERE $\beta = 0.5$

EP 4 465 209 A1

## FIG. 9

| CONNECTION SOURCE NODE | STATUS | CONNECTION INFORMATION | | | | |
|---|---|---|---|---|---|---|
| | | client | Website1 | user | Website.Directory | GitHubProject |
| client | owned | | 1 | 0 | 1 | 1 |
| Website1 | owned | 0 | | 0 | 1 | 1 |
| user | undiscovered | 0 | 0 | | 0 | 0 |
| Website.Directory | discovered | 0 | 1 | 0 | | 0 |
| GitHubProject | discovered | 0 | 0 | 0 | 0 | |

# FIG. 10

## FIG. 11

Episode: 3,Time step: 240, Reward attacker: 2

GitHubProject   Website.Directory

client → Website1

user

STOP

RESUME

EP 4 465 209 A1

## FIG. 12

START

S1201 — INITIALIZATION

S1202 — SETTING OF RISK PARAMETER TABLE

S1203 — LEARNER EXECUTION

S1204 — SELECTION UNIT EXECUTION

S1205 — ACTOR EXECUTION

S1206 — UPDATE OF NETWORK STATE AND CALCULATION OF REWARD

S1207 — STORAGE OF REPLAY MEMORY AND DISPLAY OF NETWORK

S1208 — DETERMINATION OF LEARNING EXECUTION — No → S1203

Yes

S1209 — UPDATE OF SUPERVISED SIGNAL y(j)

WHEN t = t + 1, UPDATE TIME STEP t

S1210 — LEARNING CALCULATION

S1211 — A: IS RISK PARAMETER CHANGED  B: IS INITIAL NETWORK CHANGED

1: No IN BOTH → S1203

2: Yes ONLY IN A → S1202

3: Yes IN B → S1201

EP 4 465 209 A1

## FIG. 13

ANALYSIS TARGET DB — 1300

| NODE ID | ATTACK SIDE STATUS | DEFENSE SIDE STATUS | VULNERABILITY | ATTACK SIDE CONNECTION RELATIONSHIP | DEFENSE SIDE CONNECTION RELATIONSHIP |
|---|---|---|---|---|---|
| client | owned | undiscovered | Search web history for list of accessed websites | GitHubProject, Website.Directory, Website1 | |
| Website1 | owned | owned | Website page content shows a link to GitHub repo | GitHubProject, Website.Directory | Website.Directory |
| | | | Website page source contains reference to browseable relative web directory | | |
| | | | bash history leaking creds for the monitoring user | | |
| user | undiscovered | discovered | azurecredential.txt file in home directory | | |
| Website. Directory | discovered | owned | Discover MYSQL credentials MySql for user | Website1 | Website1 |
| GitHubPr oject | discovered | owned | Some secure access token (SAS) leaked in a reverted git commit | | |

(301) (1301) (1302) (303) (1303) (1304)

FIG. 14

REINFORCEMENT LEARNING CIRCUIT

ATTACK SIDE SELECTION UNIT

ATTACK SIDE CIRCUIT CONFIGURATION

522A — ATTACK SIDE DETERMINA-TION UNIT

| LEARNER | ACTOR | — 103A |
|---------|-------|--------|
| 0.5 | 0.0:0.9 | |

105A

520A

132A    131A

130A

ATTACK SIDE ACTION TABLE — 1400A

521A — ATTACK SIDE EXTRACTION UNIT

510A

500 — DATA MEMORY

ATTACK SIDE ACTOR UNIT

ATTACK SIDE LEARNER — 102A

207

510D

DEFENSE SIDE ACTOR UNIT

DEFENSE SIDE LEARNER — 102D

DEFENSE SIDE ARM SELECTION UNIT

105D

522D — DEFENSE SIDE DETERMINER

| LEARNER | ACTOR |
|---------|-------|
| 0.5 | 0.0:0.9 |

DEFENSE SIDE ACTION TABLE

103D

1400D

520D

132D    131D

130D

521D — DEFENSE SIDE EXTRACTION UNIT

DEFENSE SIDE CIRCUIT CONFIGURATION

# FIG. 15

## FIG. 16

**START**

S1201 — INITIALIZATION

S1202 — SETTING OF RISK PARAMETER TABLE

S1203A — ATTACK SIDE LEARNER EXECUTION  
S1203D — DEFENSE SIDE LEARNER EXECUTION

S1204A — ATTACK SIDE SELECTION UNIT EXECUTION  
S1204D — DEFENSE SIDE SELECTION UNIT EXECUTION

S1205A — ATTACK SIDE ACTOR EXECUTION  
S1205D — DEFENSE SIDE ACTOR EXECUTION

S1606 — UPDATE OF NETWORK STATE AND CALCULATION OF REWARD

S1207 — STORAGE OF REPLAY MEMORY AND DISPLAY OF NETWORK

S1208 — PROCEED TO LEARNING — No → S1203

Yes

S1209 — UPDATE OF SUPERVISED SIGNAL y(j)

WHEN t = t + 1, UPDATE TIME STEP t

S1210 — LEARNING CALCULATION

S1211 — A: IS RISK PARAMETER CHANGED  B: IS INITIAL NETWORK CHANGED

1: No IN BOTH → S1203

2: Yes ONLY IN A → S1202

3: Yes IN B → S1201

Europäisches
Patentamt

European
Patent Office

Office européen
des brevets

## EUROPEAN SEARCH REPORT

**Application Number**

EP 24 17 1219

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ADRIÀ PUIGDOMÈNECH BADIA ET AL: "Agent57: Outperforming the Atari Human Benchmark", ARXIV.ORG, CORNELL UNIVERSITY LIBRARY, 201 OLIN LIBRARY CORNELL UNIVERSITY ITHACA, NY 14853, 30 March 2020 (2020-03-30), XP081631544, * page 1 - page 8 * * page 12 - page 24 * ----- | 1-10 | INV. G06N3/045 G06N3/092 |
| A | Seres Peter: "Distributional Reinforcement Learning for Flight Control A risk-sensitive approach to aircraft attitude control using Distributional RL", Thesis, 9 November 2022 (2022-11-09), XP093212434, Retrieved from the Internet: URL:https://repository.tudelft.nl/record/uuid:6cd3efd1-b755-4b04-8b9b-93f9dabb6108 [retrieved on 2024-10-07] * the whole document * ----- | 1-10 | |
| A | THIBAUT TH\'EATE ET AL: "Risk-Sensitive Policy with Distributional Reinforcement Learning", ARXIV.ORG, CORNELL UNIVERSITY LIBRARY, 201 OLIN LIBRARY CORNELL UNIVERSITY ITHACA, NY 14853, 30 December 2022 (2022-12-30), XP091405100, * the whole document * ----- | 1-10 | **TECHNICAL FIELDS SEARCHED (IPC)** G06N |

-/--

The present search report has been drawn up for all claims

| Place of search | Date of completion of the search | Examiner |
|---|---|---|
| The Hague | 8 October 2024 | Cilia, Elisa |

EPO FORM 1503 03.82 (P04C01)

Europäisches
Patentamt

European
Patent Office

Office européen
des brevets

# EUROPEAN SEARCH REPORT

Application Number

EP 24 17 1219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MUHATI ERIC ET AL: "Asynchronous Advantage Actor-Critic (A3C) Learning for Cognitive Network Security", 2021 THIRD IEEE INTERNATIONAL CONFERENCE ON TRUST, PRIVACY AND SECURITY IN INTELLIGENT SYSTEMS AND APPLICATIONS (TPS-ISA), IEEE, 13 December 2021 (2021-12-13), pages 106-113, XP034112022, DOI: 10.1109/TPSISA52974.2021.00012 * the whole document * | 1-10 | |
| A | FOLEY MYLES M FOLEY20@IMPERIAL AC UK ET AL: "Autonomous Network Defence using Reinforcement Learning", PROCEEDINGS OF THE 2ND ACM INTERNATIONAL WORKSHOP ON DISTRIBUTED MACHINE LEARNING, ACMPUB27, NEW YORK, NY, USA, 30 May 2022 (2022-05-30), pages 1252-1254, XP058786887, DOI: 10.1145/3488932.3527286 ISBN: 978-1-4503-9140-5 * the whole document * | 1-10 | **TECHNICAL FIELDS SEARCHED (IPC)** |

The present search report has been drawn up for all claims

| Place of search | Date of completion of the search | Examiner |
|---|---|---|
| The Hague | 8 October 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 465 209 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023077712 A
- US 20160148251 A

- JP 2012068780 A

### Non-patent literature cited in the description

- **BADIA, ADRIÀ PUIGDOMÈNECH et al.** Agent57: Outperforming the atari human benchmark. *International Conference on Machine Learning. PMLR,* 2020

- **MIHATSCH, O. ; NEUNEIER, R.** Risk-Sensitive Reinforcement Learning. *Machine Learning,* 2002, vol. 49, 267-290